(19) Europäisches Patentamt
European Patent Office
Office européen des brevets

(11) **EP 4 694 212 A1**

(12) **EUROPEAN PATENT APPLICATION**
published in accordance with Art. 153(4) EPC

(43) Date of publication:
**11.02.2026 Bulletin 2026/07**

(21) Application number: **23931572.4**

(22) Date of filing: **07.04.2023**

(51) International Patent Classification (IPC):
**H04W 4/02** (2018.01)

(52) Cooperative Patent Classification (CPC):
**H04W 64/00; H04W 4/02; H04W 68/00**

(86) International application number:
**PCT/CN2023/087102**

(87) International publication number:
**WO 2024/207512 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• **ZHAO, Zheng
  Shanghai 201601 (CN)**
• **LYU, Ling
  Shanghai 201601 (CN)**
• **YANG, Zhongzhi
  Shanghai 201601 (CN)**

(74) Representative: **Fish & Richardson P.C.
Highlight Business Towers
Mies-van-der-Rohe-Straße 8
80807 München (DE)**

(54) **POSITIONING METHODS, TERMINAL DEVICES AND NETWORK DEVICES**

(57) The present disclosure provides a method for positioning, a terminal device, and a network device. The method includes: determining, by a terminal device, a first beam for transmitting uplink reference signals based on a signal measurement result of a first signal. The first signal includes at least one of a downlink signal or an uplink signal, and the uplink reference signals are configured to position the terminal device.

**FIG. 5**

## Description

### TECHNICAL FIELD

The present disclosure relates to the field of communication technology, and in particular to a method for positioning, a terminal device, and a network device.

### BACKGROUND

A terminal device can achieve uplink positioning by sending uplink reference signals. In a multi-beam system, the terminal device can transmit the uplink reference signals using beams. However, there is currently no specific regulation on how to determine, by the terminal device, the beams for transmitting the uplink reference signals.

### SUMMARY

The present disclosure provides a method for positioning, a terminal device, and a network device. Aspects of the present disclosure will be illustrated below.

In a first aspect, a method for positioning is provided, including: determining, by a terminal device, a first beam for transmitting uplink reference signals based on a signal measurement result of a first signal, where the first signal includes at least one of a downlink signal or an uplink signal, and the uplink reference signals are configured to position the terminal device.

In a second aspect, a method for positioning is provided, including: sending, by a first network device, first information to a terminal device. The first information and a signal measurement result of a first signal are configured to determine a first beam for transmitting uplink reference signals by the terminal device, the first signal includes a downlink signal from a first cell, and the uplink reference signals are configured to position the terminal device. The first information is configured to indicate a correspondence relationship between a downlink signal index of the first cell and transmission beams of the terminal device.

In a third aspect, a method for positioning is provided, including: in response to a target cell to which a terminal device belongs not belonging to a first cell, sending, by a second network device, a paging message to the terminal device. The paging message is configured for the terminal device to establish a connection for transmitting second information with the target cell, the second information is configured to indicate a correspondence relationship between a downlink signal index of the target cell and transmission beams of the terminal device, and the first cell refers to a cell having a downlink signal index, and a correspondence relationship between the downlink signal index of the first cell and the transmission beams of the terminal device is stored in the terminal device.

In a fourth aspect, a method for positioning is provided, including: transmitting, by a terminal device, uplink reference signals configured to determine a first timing advance (TA) of the terminal device relative to a fourth cell, where the fourth cell refers to a cell to which the terminal device currently belongs; and receiving, by the terminal device, first indication information sent by a third network device, where the first indication information is configured to indicate the terminal device to update TA and is sent in response to the first TA satisfying a first condition.

In a fifth aspect, a method for positioning is provided, including: sending, by a third network device, first indication information to a terminal device. The first indication information is configured to indicate the terminal device to update TA and is sent in response to a first TA satisfying a first condition, the first TA is determined based on uplink reference signals transmitted by the terminal device and refers to a TA of the terminal device relative to a fourth cell, and the fourth cell refers to a cell to which the terminal device currently belongs.

In a sixth aspect, a terminal device is provided, including: a determination unit configured to determine a first beam for transmitting uplink reference signals based on a signal measurement result of a first signal. The first signal includes at least one of a downlink signal or an uplink signal, and the uplink reference signals are configured to position the terminal device.

In a seventh aspect, a network device is provided, the network device is a first network device and includes: a sending unit configured to send first information to a terminal device. The first information and a signal measurement result of a first signal are configured to determine a first beam for transmitting uplink reference signals by the terminal device, the first signal includes a downlink signal from a first cell, and the uplink reference signals are configured to position the terminal device. The first information is configured to indicate a correspondence relationship between a downlink signal index of the first cell and transmission beams of the terminal device.

In an eighth aspect, a network device is provided, the network device is a second network device and includes: a sending unit configured to send a paging message to a terminal device in response to a target cell to which the terminal device belongs not belonging to a first cell. The paging message is configured for the terminal device to establish a connection for transmitting second information with the target cell, the second information is configured to indicate a correspondence relationship between a downlink signal index of the target cell and transmission beams of the terminal device, and the first cell refers to a cell having a downlink signal index, and a correspondence relationship between the downlink signal index of the first cell and the transmission beams of the terminal device is stored in the terminal device.

In a ninth aspect, a terminal device is provided, including: a sending unit configured to send uplink reference signals, where the uplink reference signals are configured to determine a first TA of the terminal device relative to a fourth cell, and the fourth cell refers to a cell to which the terminal device currently belongs; and a reception unit configured to receive first indication information sent by a third network device, where the first indication information is configured to indicate the terminal device to update TA and is sent in response to the first TA satisfying a first condition.

In a tenth aspect, a network device is provided, the network device is a third network device and includes: a sending unit configured to send first indication information to a terminal device. The first indication information is configured to indicate the terminal device to update TA and is sent in response to a first TA satisfying a first condition, the first TA is determined based on uplink reference signals transmitted by the terminal device and refers to a TA of the terminal device relative to a fourth cell, and the fourth cell refers to a cell to which the terminal device currently belongs.

In an eleventh aspect, a terminal device is provided, including: a memory and a processor. The memory is configured to store a program, and the processor is configured to call the program in the memory, causing the terminal device to perform operations of the method according to the first aspect or the fourth aspect.

In a twelfth aspect, a network device is provided, including: a memory and a processor. The memory is configured to store a program, and the processor is configured to call the program in the memory, causing the network device to perform operations of the method according to the second aspect, the third aspect, or the fifth aspect.

In a thirteenth aspect, a device is provided, including a processor, where the processor is configured to call programs from a memory, causing the device to perform operations of the method according to any one of the first aspect to the fifth aspect.

In a fourteenth aspect, a chip is provided, including a processor, where the processor is configured to call programs from a memory, causing a device having the chip to perform operations of the method according to any one of the first aspect to the fifth aspect.

In a fifteenth aspect, a computer-readable storage medium is provided, configured to store programs, which cause a computer to perform operations of the method according to any one of the first aspect to the fifth aspect.

In a sixteenth aspect, a computer program product is provided, including programs that cause a computer to perform operations of the method according to any one of the first aspect to the fifth aspect.

In a seventeenth aspect, a computer program is provided, configured to causes a computer to perform operations of the method according to any one of the first aspect to the fifth aspect.

In the present disclosure, the first beam for transmitting the uplink reference signals is determined based on the signal measurement result of at least one of the downlink signal or the uplink signal. In this way, a specific solution for determining the beam configured to transmit uplink reference signals is provided.

## BRIEF DESCRIPTION OF THE DRAWINGS

FIG. 1 shows a wireless communication system 100 to which the embodiments of the present disclosure are applicable.

FIG. 2 is a schematic diagram of a multi-beam system to which the embodiments of the present disclosure are applicable.

FIG. 3 is a schematic diagram of another multi-beam system to which the embodiments of the present disclosure are applicable.

FIG. 4 is a system architecture diagram of a positioning system to which the embodiments of the present disclosure are applicable.

FIG. 5 is a schematic flowchart of a method for positioning provided in some embodiments of the present disclosure.

FIG. 6 is a schematic flowchart of another method for positioning provided in some embodiments of the present disclosure.

FIG. 7 is a schematic block diagram of a terminal device provided in some embodiments of the present disclosure.

FIG. 8 is a schematic block diagram of a first network device provided in some embodiments of the present disclosure.

FIG. 9 is a schematic block diagram of a second network device provided in some embodiments of the present disclosure.

FIG. 10 is a schematic block diagram of another terminal device provided in some embodiments of the present disclosure.

FIG. 11 is a schematic block diagram of a third network device provided in some embodiments of the present disclosure.

FIG. 12 is a structural schematic diagram of a device provided in some embodiments of the present disclosure.

## DETAILED DESCRIPTION OF THE EMBODIMENTS

The following will illustrate, in conjunction with the accompanying drawings, the technical solutions of the present disclosure.

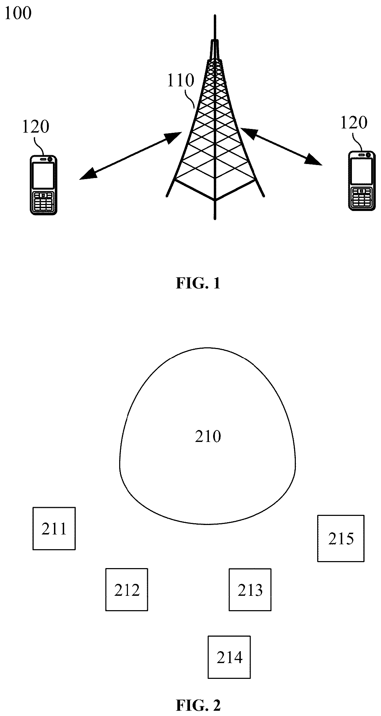

FIG. 1 shows a wireless communication system 100 to which the embodiments of the present disclosure are applicable. The wireless communication system 100 may include network devices 110 and terminal devices 120. The network devices 110 may be devices that communicate with the terminal devices 120. The network devices 110 can provide communication coverage for a specific geographic area and can communicate with the terminal devices 120 located in the coverage area.

FIG. 1 exemplarily shows a network device and two terminal devices. In some embodiments, the wireless communication system 100 may include a plurality of network devices, and there may be other numbers of terminal devices located in a respective coverage area of each network device, which will not be specified in the embodiments of the present disclosure.

In some embodiments, the wireless communication system 100 may further include other network entities such as a network controller, a mobility management entity, and the like, which will not be specified in the embodiments of the present disclosure.

It should be understood that the technical solutions of the embodiments of the present disclosure may be applied to various communication systems, such as 5th generation (5G) systems or new radio (NR), long term evolution (LTE) systems, LTE frequency division duplex (FDD) systems, LTE time division duplex (TDD), and the like. The technical solutions provided in the present disclosure may also be applied to future communication systems, such as the sixth generation mobile communication system, satellite communication system, and the like.

The terminal device in the embodiments of the present disclosure may be referred to as user equipment (UE), an access terminal, a user unit, a user station, a mobile station (MS), a mobile terminal (MT), a remote station, a remote terminal, a mobile device, a user terminal, a terminal, a wireless communication device, a user agent or a user device. The terminal device in the embodiments of the present disclosure may refer to a device that provides voice and/or data connectivity to a user, and can be used to connect people, an object and a computer, such as a handheld device or a vehicle-mounted device with wireless connection function. The terminal device in the embodiments of the present disclosure may be a mobile phone, a tablet computer (Pad), a notebook computer, a palm computer, a mobile internet device (MID), a wearable device, a virtual reality (VR) device, an augmented reality (AR) device, a wireless terminal in industrial control, a wireless terminal in self-driving, a wireless terminals in a remote medical surgery, a wireless terminals in smart grid, a wireless terminal in transportation safety, a wireless terminal in a smart city, a wireless terminal in a smart home, or the like. In some embodiments, the UE may function as a base station. For example, the UE may function as a scheduling entity that provides a lateral link signal between UEs in V2X or D2D, etc. For example, a cellular phone and a car communicate with each other using lateral link signals. The cellular phone communicates with smart home devices, without relaying communication signals by a base station.

The network device in the embodiments of the present disclosure is a device configured to communicate with a terminal device, which may also be referred to as an access network device or a wireless access network device, for example, the network device may be a base station. The network device in the embodiments of the present disclosure may refer to a radio access network (RAN) node (or device) that provides access to a wireless network for a terminal device. The base station may broadly cover the following names, or be a substitute for the following names, such as Node B, evolved NodeB (eNB), next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a wireless node, an access piont (AP), a transmitting node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or a combination thereof. A base station may also be a communication module, a modem or a chip arranged in the aforementioned equipment or devices. The base station may also be a mobile switching center, a device that serves as a base station in device-to-device (D2D) communication, vehicle-to-everything (V2X) communication, machine-to-machine (M2M) communication, a network-side device in 6G network, and a device that serves as a base station in future communication systems. The base station can support networks using the same or different access technologies. The specific technology and equipment form adopted by the network device are not limited in the embodiments of the present disclosure.

The base station may be fixed or mobile. For example, a helicopter or a drone may be configured as a mobile base station, and one or more cells may move with the location of the mobile base station. In other examples, a helicopter or a drone may be configured as a device for communicating with another base station.

In some deployment, the network device in the embodiments of the present disclosure may refer to CU or DU, or the network device may include both CU and DU. gNB may also include AAU.

The network devices and the terminal devices may be deployed on land, including indoor or outdoor, handheld or vehicle boarded, or may be deployed on the water, or may further be deployed on airplanes, balloons and satellites in the air. The scenes where the network devices and the terminal devices are located is not limited in the embodiments of the present disclosure.

It should be understood that all or part of the functions of the communication devices in the present disclosure may also be implemented by the functions of software running on hardware, or by the virtualization functions instantiated on platforms (such as cloud platforms).

### Radio Resource Control (RRC) state

At present, protocols define three RRC states for terminal devices: RRC_CONNECTED, RRC-IDLE, and RRC-INACTIVE.

The RRC_CONNECTED state may refer to a state in which a terminal device has completed a random access procedure and without RRC release. There is an RRC connection between the terminal device and a network device (such as an access network device). In the RRC_CONNECTED state, the terminal device may perform data transmission with the network device, such as downlink data transmission and/or uplink data transmission. Alternatively, the transmission between the terminal device and the network device may also be implemented using terminal-specific data channels and/or control channels, in order to transmit specific information or unicast information of the terminal device.

In the RRC_CONNECTED state, the network device can determine the cell-leveled location information of the terminal device, in other words, the network device can determine the cell to which the terminal device belongs. In the RRC_CONNECTED state, when the location of the terminal device varies, such as moving from one cell to another, the network device may instruct the terminal device to perform cell switching. Thus, the mobility of the terminal device in the RRC_CONNECTED state is controlled by the network device, and the terminal device may switch to the designated cells according to instructions issued by the network.

The RRC-IDLE state refers to a state in which a terminal device resides in a cell but has not undergone random access. The terminal device typically enters the RRC-IDLE state after power on or after RRC release. In the RRC-IDLE state, there is no RRC connection between the terminal device and the network device (such as a resident network device), the network device does not store the context of the terminal device, and no connection for the terminal device is established between the network device and the core network. When the terminal device needs to switch from the RRC-IDLE state to the RRC_CONNECTED state, initiation of a RRC connection establishment procedure is needed.

In the RRC-IDLE state, the core network (CN) may send paging messages to the terminal device, in other words, a paging process may be triggered by the CN. In some embodiments, paging areas may also be configured by the CN. In the RRC-IDLE state, when the location of the terminal device varies, such as moving from one cell to another, the terminal device may initiate cell reselection. Thus, the mobility of the terminal device in the RRC-IDLE state is based on the cell reselection of the terminal device.

The RRC-INACTIVE state is a newly defined state for reducing air interface signaling, quickly restoring wireless connections, and quickly restoring data services. The RRC-INACTIVE state is an intermediate state between the RRC_CONNECTED state and the RRC-IDLE state. That is to say, the terminal device has entered the RRC_CONNECTED state and released the RRC connection with the network device, but the network device has stored the context of the terminal device. In addition, the connection for the terminal device established between the network device and the core network is not released, in other words, the user plane bearer and the control plane bearer between RAN and CN are still maintained, i.e. a CN-NR connection presents.

In the RRC-INACTIVE state, RAN may send paging messages to the terminal device, in other words, the paging process may be triggered by RAN. With the management of RAN based on the paging areas of RAN, the network device can know the location of the terminal device is at the level of the paging areas of RAN.

In the RRC-INACTIVE state, when the location of the terminal device varies, such as moving from one cell to another, the terminal device may initiate cell reselection. Thus, the mobility of the terminal device in the RRC-INACTIVE state is based on the cell reselection of the terminal device.

**Multi-Beam System**

The design objectives of communication systems (such as NR systems) include high bandwidth communication in high frequency bands (such as frequency bands above 6GHz). When the operating frequency increases, the path loss during transmission also increase, thereby affecting the coverage capability of high-frequency systems. Therefore, in order to effectively ensure the coverage ranges of the high-frequency bands, an effective technical solution is based on massive multiple-in multiple-out (MIMO) antenna arrays to form shaped beams with greater gains, overcome propagation losses, and ensure the coverage ranges of the communication systems.

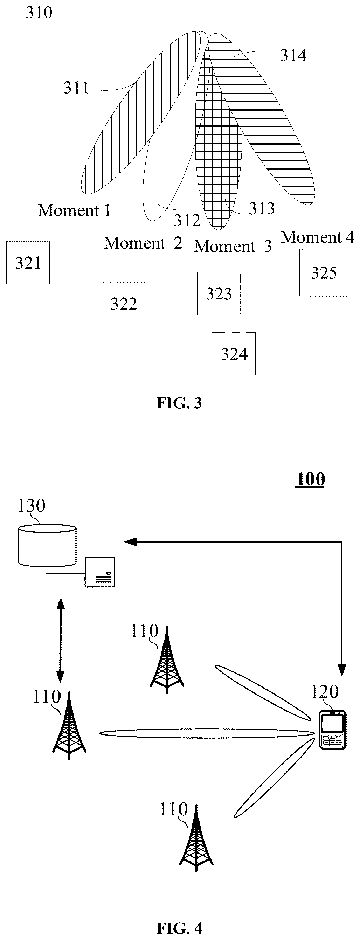

In order to facilitate the understanding of a multi-beam system, in the following, referring to FIGS. 2 and 3, the scenario of communication between a network device and a terminal is taken as an example, to introduce the communication process of beam-based communication.

Referring to FIG. 2, in traditional communication systems such as 2G, 3G, or 4G systems, a cell (or a sector) typically uses a relatively wide beam 210 to cover the entire cell (also referred to as "sector"). In this way, at each moment, terminals in the cell (e.g. terminals 211 to 215) can communicate with network devices using this relatively wide beam, for example, to obtain transmission resources allocated by network devices.

Referring to FIG. 3, in relatively new communication systems (such as NR systems), a multi-beam system 310 may be used to cover the entire cell, in other words, each beam (such as beams 311 to 314) in the multi-beam system covers a respective relatively small area in the cell, and the entire cell can be covered by a plurality of beams using beam sweeping.

During the beam sweeping, the beams for covering various areas in the cell vary with time. The network device may align a beam with a terminal device when performing data transmission to this terminal device, forming a long and narrow beam, thereby increasing the coverage area of the cell. For example, at moment 1, the communication system may cover the area where terminal 321 is located using beam 311. At moment 2, the communication system may cover the area where terminal 322 is located using beam 312. At moment 3, the communication system may cover the area where terminal 323 and terminal 324 are located using beam 313. At moment 4, the communication system may cover the area where terminal 325 is located using beam 314.

The terminal device can determine the direction of the beam that needs to be sent to the network device. The terminal device can determine the beam configured to send to the network device based on the transmission beams used by the network device.

Various beams may be identified according to the signals carried by the beams. For example, the synchronization signals / physical broadcast channel blocks (SSBs) transmitted on different beams are different from each other, and the terminal device can identify different beams according to different SSBs. For example, the channel state information reference signals (CSI-RS) transmitted on different beams are different from each other, and the terminal device can identify different beams according to CSI-RS and/or CSI-RS resources.

For different communication systems, downlink signals or downlink channels (such as physical downlink control channel (PDCCH), physical downlink shared channel (PDSCH)) may be transmitted using different downlink beams. For example, in communication systems below 6G, terminal devices generally do not have analog beams. Therefore, terminal devices may use omnidirectional antennas (or approximately omnidirectional antennas) to receive downlink signals sent by network devices, and network devices may send downlink signals to terminal devices using different downlink transmission beams. For example, in millimeter-wave systems, terminal devices may have analog beams and may use the downlink reception beams corresponding to the downlink transmission beams to receive signals. In this case, the terminal devices may determine the related information of transmission beams on the network device side or the related information of corresponding reception beams on the terminal device side based on the beam indication information.

In some embodiments, the beam indication information may not directly indicate the beams, but may indicate through quasi co-location (QCL) information (or QCL assumption) among signals. Terminal devices can determine the corresponding reception signals or channels based on QCL information, where the QCL information may be indicated by TCI state.

For multi-beam systems, by using relatively narrow beams, the transmission energy can be more concentrated, thereby covering longer distances. However, each beam can cover only a respective portion of area in the cell due to the relatively narrow beams. Therefore, a multi-beam system may be understood as "sacrificing time for space".

Usually, the beams used by the transmitting end to transmit signals are referred to as "transmission beams", and the beams used by the receiving end to receive signals are referred to as "reception beams".

In some cases, the above-mentioned transmission beams may also be referred to as spatial domain transmission filters, and correspondingly, the above-mentioned reception beams may also be referred to as spatial domain reception filters. In other cases, the above-mentioned transmission beams may also be referred to as spatial domain transmission parameters, and correspondingly, the above-mentioned reception beams may also be referred to as spatial domain reception parameters. For ease of understanding, in the embodiments of the present disclosure, beams are mainly taken as examples.

**Positioning Technologies in Communication Systems**

Referring to FIG. 4, the communication system 100 may further include a positioning device 130 configured to determine the location information of the terminal devices. The positioning device 130 may be deployed in the core network. Sometimes, the positioning device 130 may also be referred to as a positioning server. Taking a NR system as an example, the positioning device 130 may be a location management function (LMF) entity. Taking other communication systems as examples, the positioning device 130 may be a location management unit (LMU), a location management center (LMC), or an evolved serving mobile location center (E-SMLC). It can be understood that the positioning device 130 may also be other network elements, nodes, or devices configured to determine the location information of terminal devices, such as network elements or nodes configured to determine the location information of terminal devices in future communication systems. The embodiments of the present disclosure do not specifically limit the name of the positioning device.

The positioning in the communication system 100 includes uplink positioning and downlink positioning. Some communication systems, such as NR systems, perform downlink positioning based on positioning reference signals (PRS). PRS, also known as downlink positioning reference signal (DL-PRS), is a type of reference signal configured for positioning functions. For example, during the downlink positioning, the terminal device 120 may first measure the PRS sent by the serving cell and neighboring cells, and estimate the relevant information for positioning measurement. Then, the terminal device 120 may report the relevant information for positioning measurement as a measurement result of PRS to the positioning device 130. The positioning device 130 may calculate the location of the terminal device 120 based on the relevant information for positioning measurement reported by the terminal device 120, thereby obtaining the location information of the terminal device 120. For example, the positioning device 130 may calculate the location information of the terminal device 120 based on the trilateration method or triangulation method.

Some communication systems, such as NR systems, perform uplink positioning based on uplink reference signals. The uplink reference signals may include, for example, sounding reference signals (SRS). For example, during the uplink positioning, the terminal device 120 sends uplink reference signals. The base station 110 (the base station for the serving cell and the neighboring cell) may obtain measurement results based on the uplink reference signals sent by the terminal. The measurement result of the uplink reference signals may include relevant information for positioning measurement. Then, the base station 110 may send the relevant information for positioning measurement to the positioning device 130. The positioning device 130 may calculate the location of the terminal device 120 based on the relevant information for positioning measurement reported by the base station 110, thereby obtaining the location information of the terminal device 120. For example, the positioning device 130 may calculate the location information of the terminal device 120 based on the trilateration method or triangulation method.

The above-mentioned relevant information for positioning measurement may include one or more of the following: time information, distance information, power information, angle information. More specifically, the relevant information for positioning measurement may include one or more of the following: time difference of arrival (TDOA), angle difference of arrival (ADOA), reference signal receive power (RSRP), and the like.

The terminal device in the embodiments of the present disclosure may be a terminal device having positioning requirements. The terminal device may be, for example, an IoT device. The terminal device may be a mobile device, a mobile asset device, a logistics device, a vehicle device, an in-vehicle terminal, an industrial device, and the like.

The mobile devices and mobile asset devices are becoming commonly used in flexible production, and the demand for real-time location data of these devices is also increasing, making positioning particularly important for the applications of these devices. In this case, positioning is particularly important for scenarios such as storage, logistics process, auto drive system, fleet management, and the like, because all relevant goods and products in these scenarios will be tracked continuously from receipt to availability. The tracking process can provide real-time control, optimize material flow, and provide relevant contextual information required for subsequent production processes. For example, for an auto drive system, the tracking process can provide information about the assembly unit that independently extracts parts from warehouse and transports them to the workshop. For another example, as a part of a flexible fleet management system, an auto drive system is continuously localized, and the tracking process can provide relevant information about fast movement and continuous interaction with the environment. For example, seamless monitoring of production machinery and assembly units and their status, as well as the positioning of related objects such as tools and workpieces, all require usage of tracking technologies. The tracking technologies enable the above systems to quickly adapt to environmental changes and achieve flexible and autonomous production control.

Low power and high-precision positioning is an indispensable part of industrial applications. Therefore, power consumption during the positioning needs to be taken into account. Especially when a terminal device moves, such as from an original serving cell to a new cell, it is necessary to consider the positioning power consumption caused by switching between cells.

In the following, the power consumption during positioning will be illustrated taking the uplink positioning based on SRS as an example. For the uplink positioning based on SRS, a network device may send SRS configuration information to terminal devices. SRS configuration information may include SRS resources and/or SRS parameters. Terminal devices may select the SRS to be sent to the network device and/or the resources for sending SRS based on the SRS configuration information.

Generally, SRS configuration information is configured cell by cell, that is to say, SRS configuration information is respectively configured for each cell. In the RRC-INACTIVE state, terminal devices may perform radio resource management (RRM) measurements on neighboring cells and select cells with relatively good signal quality (such as relatively high reference signal receiving power (RSRP)) according to certain rules to ensure the communication quality of terminal devices. This process is referred to as cell reselection.

After a terminal device reselects to a target cell, the terminal device needs to acquire the SRS configuration information corresponding to the target cell again before sending SRS. In order to acquire the SRS configuration information corresponding to the target cell, the terminal device needs to first establish an RRC connection with the target cell and receive the SRS configuration information sent by the target cell in the RRC_CONNECTED state.

From the above process, it can be seen that after the terminal device performs cell reselection, in order to acquire the SRS configuration information corresponding to the target cell, the terminal device needs to establish the RRC connection with the target cell first, then the SRS configuration information sent by the target cell can be received, which leads to an increase in power consumption of the terminal device and accordingly relatively high power consumption, contradicting the low-power requirements of the terminal device.

In order to solve the above problem, a possible solution is to configure the SRS configuration information across cells, that is to say, to configure the same SRS configuration information, such as the same SRS resources and/or SRS parameters, for one or more cells in a certain area. After a terminal device performs cell reselection, when the terminal device is still located in this area, the terminal device may continue to use the original SRS configuration information to send SRS without re-establishing an RRC connection with the target cell to acquire new SRS configuration information, which can reduce the power consumption of the terminal device. The above-mentioned area may also be referred to as an effective area, which may be understood as the area where the SRS configuration information is applicable.

In some embodiments, when the terminal device sends SRS to the network device, the terminal device may use an omnidirectional antenna or a directional antenna for transmission. That is to say, the terminal device may use the wide beam shown in FIG. 2 for transmission, or may use the narrow beam shown in FIG. 3 for transmission, i.e., use directional transmission.

When the terminal device uses the directional transmission, the terminal device may send SRS to the network device using beam directions that match the network device. When the position of the terminal device changes, for example the terminal device moves from one cell to another, the direction in which the terminal device sends SRS needs to be adjusted. In this case, how to determine, by the terminal device, the direction of sending SRS has become an urgent problem to be solved.

One solution is that the terminal device may send SRS using omnidirectional beam sweeping. In other words, the terminal device may send SRS in all beam directions. In this way, it can be ensured that each base station can accurately measure the corresponding SRS. In addition, for positioning, in order to improve positioning accuracy, as many base stations as possible should participate in the positioning procedure, and beam sweeping can ensure that more base stations can receive SRS, which is conducive to improving positioning accuracy.

When the terminal device sends SRS using omnidirectional beam sweeping, it is not necessary to configure a spatial relationship for the terminal device. The spatial relationship may be used to represent the relative positional relationship between the terminal device and the base station.

In wireless communication systems, due to hardware limitations, a terminal device cannot send a plurality of beams concurrently. The terminal device may communicate, in a time-division manner, with a network device using different beams in different periods, as shown in FIG. 3. When a terminal device sends a plurality of beams, a plurality of resources are occupied, that is to say, each beam requires a corresponding transmission resource.

Moreover, as mentioned hereinbefore, one piece of SRS configuration information may be applicable to a plurality of cells, that is to say, the functional area of an SRS is within the effective area including a plurality of cells. To prevent the inability of the positioning server to distinguish the terminal devices that send SRS during positioning detection based on SRS, different SRS configuration information may be configured for the terminal devices in the effective area. In this case, the plurality of cells in the effective area need to support all SRS, which requires each cell to be allocated with a relative great number of SRS. When SRS is transmitted using beam sweeping, each SRS occupies relative many resources, resulting in that each cell also needs to be allocated with relative many time-frequency resources.

The spatial relationship information is determined by the relative position between the terminal device and the serving cell and/or the neighboring cell. The spatial relationship information may also be understood as beam information.

In Rel-16, a plurality of SRS resources may be configured for the terminal devices in each cell, and each SRS resource is associated with a respective piece of spatial relationship information. In this way, beam sweeping for sending SRS can be used to ensure that the serving cell and the neighboring cell can receive SRS. However, for the low-power positioning in Rel-18, when a plurality of SRS resources are configured for each cell, the network side needs to reserve a large amount of SRS resources for terminal devices, resulting in low resource utilization. Upon a terminal device moves and/or performs cell reselection, the spatial relationship information may change (for example the beam direction in which SRS is sent by the terminal device to the cell may change), and the spatial relationship information needs to be updated. Therefore, it is necessary to improve the spatial relationship configuration of SRS resources across a plurality of cells to improve resource utilization.

From the above, it can be seen that when a terminal device uses beam sweeping to send SRS, it will result in high power consumption. For example, when the terminal device sends SRS in all beam directions, SRS sent in some beam directions may be invalid and cannot be correctly received by the base station. For example, SRS sent in some beam directions may be sent to non-effective areas, resulting in wastage of resources.

To address the above-mentioned problems, in the embodiments of the present disclosure, the beams configured for transmitting the uplink reference signals are determined first, and then the uplink reference signals are transmitted using the determined beams to prevent resource waste and reduce the overhead of transmitting the uplink reference signals. However, there is currently no specific solution on how to determine the beams configured for transmitting the uplink reference signals.

To this end, embodiments of the present disclosure provide a method for positioning and a device. The first beam for transmitting the uplink reference signals is determined based on the signal measurement result of at least one of the downlink signal or the uplink signal. In this way, a specific solution for determining the beam configured to transmit uplink reference signals is provided.

In some embodiments, the terminal device may also use beam sweeping to send uplink reference signals, namely the first beam is used as all the transmission beams of the terminal device. Whether the terminal device determines the first beam for transmitting the uplink reference signals based on beam sweeping or on signal measurement results may be determined by the terminal device based on its implementation or by indication from the network device.

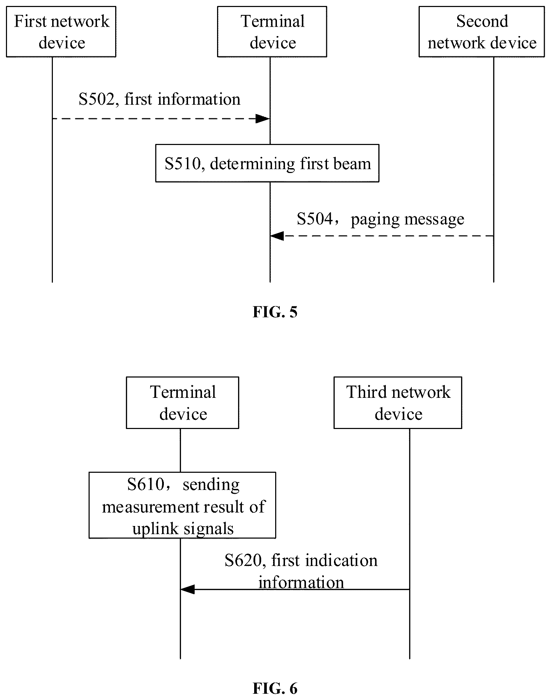

In the following, the solutions in the embodiments of the present disclosure will be illustrated in detail in conjunction with FIG. 5.

Referring to FIG. 5, at S510, a terminal device determines a first beam for transmitting uplink reference signals based on a signal measurement result of a first signal.

In some embodiments, the terminal device may be a terminal device with positioning requirements, such as any of the terminal devices illustrated hereinbefore. In some embodiments, the terminal device may be a low-power terminal device. For example, in order to reduce power consumption, the terminal device may be in the RRC-INACTIVE state, and the terminal device in RRC-INACTIVE state may select a serving cell using cell reselection during movement.

In some embodiments, the first signal may be an uplink signal or a downlink signal. For example, the first signal may include downlink signals from one or more cells. For example, the first signal may include an uplink signal sent by the terminal device to one or more cells. The one or more cells may include a serving cell and/or a neighboring cell, and the number of the neighboring cell may be one or more. The downlink signal may be, for example, a downlink reference signal. The downlink reference signal may include SSB and/or CSI-RS, etc. The uplink signal may be, for example, an uplink reference signal. The uplink reference signal may include SRS. The SRS may also be referred to as SRS-Pho.

In some embodiments, the signal measurement result of the first signal may include one or more of the following: RSRP, reference signal receiving quality (RSRQ), signal to interference plus noise ratio (SINR). In some embodiments, the signal measurement result of the first signal may include relevant information of the positioning measurement illustrated above. For example, the signal measurement result may include one or more of the following: time information, distance information, power information, and angle information. More specifically, the signal measurement result may include one or more of the following: TDOA, ADOA, RSRP, angle of arrival (AOA), received signal strength indicator (RSSI), and the like.

Due to the directional nature of the beams, determination of the first beam for transmitting the uplink reference signals by the terminal device may be understood as determination of the beam direction for transmitting the uplink reference signals by the terminal device. After determining the first beam, the terminal device may send an uplink reference signal using the first beam.

In the following, the solution that the first signal includes downlink signals and the solution that the first signal includes uplink signals will be illustrated, respectively.

In some embodiments, the terminal device may determine the first beam for transmitting the uplink reference signals based on the beam direction of the received downlink signals and on the signal measurement result of the downlink signals. Taking the first signal including downlink signals from the first cell as an example, the first cell may send downlink signals to the terminal device. The terminal device may receive the downlink signals from the first cell and measure the downlink signals to obtain a signal measurement result. When the first cell sends downlink signals, the first cell may perform beam sweeping, i.e. to transmit downlink signals on different beams. The terminal device may only receive downlink signals on one beam, or may receive downlink signals on a plurality of beams. The terminal device may determine the first beam for transmitting the uplink reference signals to the first cell based on the signal measurement results obtained in one or more beam directions.

The embodiments of the present disclosure do not specifically limit the measurement timing of downlink signals by the terminal device. In some embodiments, the terminal device may measure the downlink signals in the event of cell reselection. The terminal device may determine whether a cell reselection has occurred based on the cell reselection parameters. In some embodiments, the terminal device may not be aware of moving to a new cell. In this case, the terminal device may periodically measure the downlink signals, or the terminal device may determine the measurement timing of the downlink signals based on its implementation. Alternatively, the terminal device may determine the measurement timing of the downlink signals based on instructions from the network device.

In some embodiments, when the terminal device performs cell reselection, the terminal device triggers new measurement timing. Due to the occurrence of cell reselection, the location of the terminal device has changed, and both the base station for serving cell and the base station for neighboring cells to be measured have changed. Therefore, the terminal device may acquire neighboring cell information to be measured of new neighboring cells by re-measuring.

In some embodiments, the terminal device may determine a respective first beam for each cell, that is to say, the first beam may include beams for transmitting uplink reference signals to a plurality of cells by the terminal device. Taking a plurality of cells including cell 1 and cell 2 as an example, the terminal device may determine the beam for transmitting the uplink reference signals to cell 1 and the beam for transmitting the uplink reference signals to cell 2. In other words, the first beam includes the beam for transmitting the uplink reference signals to cell 1 by the terminal device and the beam for transmitting the uplink reference signals to cell 2 by the terminal device. The beams for transmitting the uplink reference signals to cells by the terminal device may be the same or different, which would not be specifically limited in the embodiments of the present disclosure.

The embodiments of the present disclosure do not specifically limit the method of determining the first beam by the terminal device.

In some embodiments, the terminal device may determine the first beam based on the beams with relatively good signal measurement results. The beams with relatively good signal measurement results may be the beams with signal measurement results greater than or equal to a preset threshold, or may be the beams with top N signal measurement results, where N is a positive integer.

In some embodiments, the first beam may be beams that can be sent to the effective area.

In some embodiments, the beams for transmitting the uplink reference signals to a cell by the terminal device may include one beam or a plurality of beams. When the terminal device transmits the uplink reference signals to a cell using only one beam, the first beam may be determined based on the beam with the best signal measurement result, that is to say, the terminal device may use the uplink beam corresponding to the beam with the best signal measurement result as the first beam. Of course, the terminal device may also determine the first beam based on the beam with the second-best signal measurement result.

In some embodiments, a plurality of cells may correspond to a same first beam. For example, the terminal device may determine a respective corresponding beam for each cell. Then, the terminal device may select, based on the corresponding beams of the plurality of cells, the beam shared by the plurality of cells as the first beam. For example, the plurality of cells include a second cell and a third cell, the terminal device may determine the second beam corresponding to the second cell based on the signal measurement result of the downlink signal from the second cell. The terminal device may determine the third beam corresponding to the third cell based on the signal measurement result of the downlink signal from the third cell. Furthermore, the terminal device may determine the first beam based on the second beam and the third beam. The first beam may be a beam shared by the second beam and the third beam. The direction of the first beam may be a beam direction in which both the second and third cells can receive the uplink reference signals.

The second beam may include one or more beams, and the third beam may include one or more beams. The determination of the second beam and/or the third beam may be referred to hereinbefore.

In the above, the second and third cells are taken as an example to describe the determination of the first beam, but the embodiments of the present disclosure are not limited to this. For example, the embodiments of the present disclosure may also be applied to three or more cells to determine the beam direction in which these cells can receive the uplink reference signals.

By determining the same corresponding beam for a plurality of cells, the terminal device can send uplink reference signals to the plurality of cells using one beam, thereby reducing the number of beams used by the terminal device to send the uplink reference signals, which is conducive to reducing the power consumption of the terminal device.

Regarding the base station (such as the base station corresponding to the plurality of cells), the base station may still perform SRS detection on all reserved resources, such as detecting SRS in all beam directions. Considering the mobility of the terminal device, the resources originally reserved for beam sweeping of the terminal device cannot be occupied by other terminal devices or other signals.

The following will illustrate the first signal including uplink signals.

In some embodiments, the uplink signals may include uplink signals sent by the terminal device to a plurality of cells. For example, the terminal device may send uplink signals to the plurality of cells respectively, and the plurality of cells (or the base stations corresponding to the plurality of cells) may measure the uplink signals and obtain the signal measurement results of the uplink signals. The plurality of cells may send the signal measurement results to the terminal device. In some embodiments, the plurality of cells may send the signal measurement results and the AOA corresponding to the signal measurement results to the terminal device. The terminal device may select appropriate signal measurement result based on the signal measurement results sent by the plurality of cells, and determine the first beam based on the AOA corresponding to the selected signal measurement result. The method of selecting signal measurement result by the terminal device is similar to the method of selecting the signal measurement result of downlink signals illustrated above. For the sake of simplicity, it will not be repeated here.

There are various ways for the plurality of cells to send signal measurement results to the terminal device, and the embodiments of the present disclosure do not specifically limit this. For example, the serving cell and the neighboring cell may send the signal measurement results to the terminal device through the positioning server. The serving cell and the neighboring cell may send the signal measurement results to the positioning server, and then the positioning server sends the signal measurement results to the terminal device. For example, neighboring cells may send the signal measurement results to the terminal device through the serving cell. The neighboring cells may send their signal measurement results to the serving cell, and the serving cell may send the signal measurement results of the neighboring cells and the serving cell together to the terminal device.

In some embodiments, the network device may send first configuration information configured to configure resources and/or parameters of the uplink reference signals to the terminal device. Taking the uplink reference signals including SRS as an example, the first configuration information may be SRS configuration information. In addition, the network device may further indicate a first area to the terminal device, the terminal device can send uplink reference signals based on the first configuration information as long as in the first area.

In some embodiments, the positioning server and/or the serving cell may send the signal measurement results of all uplink signals to the terminal device, and then the terminal device may select the appropriate signal measurement result. Alternatively, the positioning server and/or the serving cell may first screen the signal measurement results of the uplink signals, and then send the selected signal measurement result to the terminal device.

In some embodiments, when the terminal device has the ability of reception beam sweeping or measuring the direction of an incoming beam, the terminal device may determine the beam of the received downlink signal based on the index of the downlink signals. For example, taking the downlink signal including SSB as an example, since the SSBs carried on different beams are different from each other, the terminal device can determine the direction of the reception beam based on the SSB index.

In some embodiments, the terminal device may not have the ability of reception beam sweeping nor measuring the direction of an incoming beam. In this case, even if the terminal device knows the index of the downlink signals, the terminal device will not know the beam direction of the received downlink signal, and therefore cannot determine the first beam.

To address this problem, the embodiments of the present disclosure propose that the correspondence relationships between the downlink signal indexes of cells and the transmission beams of the terminal device may be indicated to the terminal device, so that the terminal device can determine the first beam based on the correspondence relationship. In this way, a terminal device without the ability of reception beam sweeping can also determine the beam for transmitting the uplink reference signals.

In some embodiments, taking the first signal including downlink signals from the first cell as an example, the terminal device may determine the first beam for transmitting the uplink reference signals to the first cell based on the first information and the signal measurement result of the downlink signals from the first cell. The first information may be configured to indicate a correspondence relationship between a downlink signal index of the first cell and transmission beams of the terminal device.

In some embodiments, the first information may include the correspondence relationship between the downlink signal index of the first cell and transmission beams of the terminal device, or the first information may include the correspondence relationship between the downlink signal index of the first cell and transmission beams of the first cell. Due to the fact that there is a correspondence relationship between the transmission beams of the first cell and the transmission beams of the terminal device, the terminal device can determine the transmission beams of the terminal device based on the transmission beams of the first cell. The transmission beams of the first cell may be understood as the reception beams of the terminal device.

In the following, taking the downlink signals including SSB as an example, the correspondence relationships between the SSB indexes and the transmission directions of SSB will be illustrated. The transmission directions of SSB may refer to the transmission directions of SSB by the first cell, and the terminal device may determine the transmission beams of the terminal device based on the transmission directions of SSB.

In some embodiments, when the maximum values (or the total numbers) of the SSB indexes of a plurality of cells are the same, and the SSB indexes of the plurality of cells have a same transmission direction of SSB, the network side (for example any one of the plurality of cells) sends a set of correlation relationships between transmission directions of SRS and SSB indexes to the terminal device. The set of correlation relationships are applicable to all terminal devices in the plurality of cells. The maximum value of the SSB indexes may be one or more of 4, 8, and 64.

In some embodiments, when the SSB indexes of the plurality of cells have different maximum values, but the SSB indexes of the plurality of cells have a same corresponding transmission direction of SSB for a respective maximum value (which may be 4, 8, or 64) of each SSB index, the network side (for example any one of the plurality of cells) sends, for each maximum value of the SSB indexes, a respective correlation relationship between a transmission direction of SRS and a SSB index to the terminal device. Taking the maximum values of the SSB indexes including 4, 8, and 64 as an example, the network side may send three sets of correlation relationships between transmission directions of SRS and SSB indexes to the terminal device. That is to say, for the case where the maximum value of SSB indexes is 4, the network side sends a set of correlation relationships between SSB indexes and transmission directions of SSB to the terminal device, for the case where the maximum value of SSB indexes is 8, the network side sends another set of correlation relationships between SSB indexes and transmission directions of SSB to the terminal device, and for the case where the maximum value of SSB indexes is 64, the network side sends still another set of correlation relationships between SSB indexes and transmission directions of SSB to the terminal device.

In some embodiments, when the SSB indexes of the plurality of cells have different maximum values, the network side (for example any one of the plurality of cells) may send, for only one maximum value of the SSB indexes, a set of correlation relationships between SSB indexes and transmission directions of SSB to the terminal device. For other maximum values of the SSB indexes, the terminal device may determine the correlation relationships between SSB indexes and transmission directions of SSB according to some certain correspondence relationships.

In some embodiments, the second information may be configured to indicate a first correspondence relationship referring to a correspondence relationship between SSB indexes and transmission directions of the SSB in response to the SSB indexes having a maximum value of M. The terminal device may determine a second correspondence relationship based on the first correspondence relationship. The second correspondence relationship refers to a correspondence relationship between the SSB indexes and the transmission directions of the SSB in response to the SSB indexes having a maximum value of N. M is valued by one of 4, 8, and 64, and N is valued by one or two of 4, 8, and 64. For example, the terminal device may determine the second correspondence relationship and a third correspondence relationship based on the first correspondence relationship. The first correspondence relationship referring to a correspondence relationship between the SSB indexes and the transmission directions of the SSB in response to the SSB indexes having a maximum value of 64, the second correspondence relationship refers to a correspondence relationship between the SSB indexes and the transmission directions of the SSB in response to the SSB indexes having a maximum value of 4, and the third correspondence relationship refers to a correspondence relationship between the SSB indexes and the transmission directions of the SSB in response to the SSB indexes having a maximum value of 8. Alternatively, the first correspondence relationship referring to a correspondence relationship between the SSB indexes and the transmission directions of the SSB in response to the SSB indexes having a maximum value of 4, the second correspondence relationship refers to a correspondence relationship between the SSB indexes and the transmission directions of the SSB in response to the SSB indexes having a maximum value of 8, and the third correspondence relationship refers to a correspondence relationship between the SSB indexes and the transmission directions of the SSB in response to the SSB indexes having a maximum value of 64. Alternatively, the first correspondence relationship referring to a correspondence relationship between the SSB indexes and the transmission directions of the SSB in response to the SSB indexes having a maximum value of 8, the second correspondence relationship refers to a correspondence relationship between the SSB indexes and the transmission directions of the SSB in response to the SSB indexes having a maximum value of 4, and the third correspondence relationship refers to a correspondence relationship between the SSB indexes and the transmission directions of the SSB in response to the SSB indexes having a maximum value of 64.

In some embodiments, the network side may send, for a maximum value of 64 of the SSB indexes, a set of correlation relationships between the SSB indexes and the transmission directions of SSB to the terminal device. The terminal device may determine, based on this set of correlation relationships, the correlation relationships between the SSB indexes and the transmission directions of SSB when the SSB indexes have a maximum value of 4 or 8.

For example, when a maximum value L of the SSB indexes is 4 or 8, the correlation relationships between the SSB indexes and the transmission directions of SRS may be determined based on the following formulas:

$$\text{Direction\_4}(i) = \text{Direction\_64}(i*16+x1);$$

and

EP 4 694 212 A1

$$Direction\_8(i) = Direction\_64(i*8+x2).$$

In the formulas, i refers to a SSB index and is greater than or equal to 0 and is less than a maximum value of the SSB index, Direction _4(i) refers to a transmission direction of the SSB in response to the SSB indexes having a maximum value of 4 and being valued i, Direction_8(i) refers to a transmission direction of the SSB in response to the SSB indexes having a maximum value of 8 and being valued i, Direction_64(i) refers to a transmission direction of the SSB in response to the SSB indexes having a maximum value of 64 and being valued i, x1 is greater than or equal to 0 and is less than or equal to 15, and x2 is greater than or equal to 0 and is less than or equal to 7.

In some other embodiments, the network side may send, for a maximum value of 4 of the SSB indexes, a set of correlation relationships between transmission directions of SRS and SSB indexes to the terminal device. The terminal device may determine, based on this set of correlation relationships, the correlation relationships between the SSB indexes and the transmission directions of SSB when the SSB indexes have a maximum value of 8 or 64.

For example, when a maximum value L of the SSB indexes is 8 or 64, the correlation relationships between the SSB indexes and the transmission directions of SRS may be determined based on the following formulas:

Direction_64(i) = Direction_4(floor(i/16)) + (Direction_4(floor(i/16)) - Direction_4(floor (i/16) - 1)) / 16 * mod(i,16); and Direction _8(i) = Direction _4(floor(i/2)) + (Direction_4(floor(i/2))-Direction_4(floor(i/2) - 1)) / 2 * mod(i,2).

In the formulas, i refers to a SSB index and is greater than or equal to 0 and is less than a maximum value of the SSB index, Direction _4(i) refers to a transmission direction of the SSB in response to the SSB indexes having a maximum value of 4 and being valued i, Direction_8(i) refers to a transmission direction of the SSB in response to the SSB indexes having a maximum value of 8 and being valued i, and Direction _64(i) refers to a transmission direction of the SSB in response to the SSB indexes having a maximum value of 64 and being valued i.

In some other embodiments, the network side may send, for a maximum value of 8 of the SSB indexes, a set of correlation relationships between transmission directions of SRS and SSB indexes to the terminal device. The terminal device may determine, based on this set of correlation relationships, the correlation relationships between the SSB indexes and the transmission directions of SSB when the SSB indexes have a maximum value of 4 or 64.

For example, when a maximum value L of the SSB indexes is 4 or 64, the correlation relationships between the SSB indexes and the transmission directions of SRS may be determined based on the following formulas:

$$Direction\_4(i) = Direction\_8(i*2 + x3);$$

and

Direction_64(i) = Direction_8(floor(i/8)) + (Direction _4(floor(i/8)) - Direction_8(floor(i/8) - 1))/8 * mod(i,8).

In the formulas, i refers to a SSB index and is greater than or equal to 0 and is less than a maximum value of the SSB index, Direction _4(i) refers to a transmission direction of the SSB in response to the SSB indexes having a maximum value of 4 and being valued i, Direction_8(i) refers to a transmission direction of the SSB in response to the SSB indexes having a maximum value of 8 and being valued i, Direction _64(i) refers to a transmission direction of the SSB in response to the SSB indexes having a maximum value of 64 and being valued I, and x2 is greater than or equal to 0 and is less than or equal to 1.

In some embodiments, the above-mentioned plurality of cells may be the plurality of cells in the effective area.

In some embodiments, the downlink signal index of the first cell may include the indexes of the downlink signals that the first cell can support. The indexes of the downlink signals that the first cell can support may be understood as the indexes corresponding to the downlink signals that the first cell can transmit. Taking the downlink signals including SSB as an example, the first cell may send SSBs on different beams, and the downlink signal index of the first cell may include the index of SSBs sent by the first cell in all beam directions.

In some embodiments, the downlink signal index of the first cell may include a portion of the indexes of downlink signals that the first cell can support. The portion of the indexes of downlink signals may be the indexes corresponding to the downlink signals that the terminal device can receive. Due to the fact that the terminal device only can receive the downlink signals sent by the first cell on a portion of beams, the downlink signal index of the first cell may include only a portion of the indexes of the downlink signals. In this way, the signaling overhead for transmitting the first information can be reduced.

The portion of the indexes of downlink signals may be determined based on the cell where the terminal device is located. For example, based on the cell where the terminal device is located, the relative positional relationship between the terminal device and the first cell can be determined, thereby determining the portion of the indexes of downlink signals.

It is noted that when the downlink signal index of the first cell includes a portion of indexes of downlink signals, the transmission beams of the terminal device corresponding to the portion of indexes of downlink signals are a portion of the transmission beams of the terminal device. The portion of the transmission beams may also be referred to as a subset of the transmission beams of the terminal device.

In some embodiments, the first information may be sent from the first network device to the terminal device. As shown in FIG. 5, the method shown in FIG. 5 may include operation S502, where the first network device sends the first information to the terminal device. The first network device may include a positioning server and/or a base station. The base station may be a serving base station of the terminal device. For example, the first information may be determined by the positioning server, and the positioning server may send the first information to the base station. Then the base station may send the first information to the terminal device. The positioning server may send the first information to the base station using NR positioning protocol (NRPP) signaling.

In some embodiments, the positioning server may receive signal measurement results of the uplink reference signals sent by a plurality of cells, and determine, based on the signal measurement results, the cell where the terminal device is located, and then determine the first information to be sent to the terminal device.

In some embodiments, the terminal device may select the first beam from a set of beams pre-configured by the network device when determining the first beam. For example, the network device may pre-configure a set of uplink transmission beams (UL Tx beams) for the terminal device, and the terminal device may select the first beam from the set of uplink transmission beams based on the signal measurement result of the first signal.

In some embodiments, the first cell may include all cells in the effective area, or the first cell may only include a portion of cells in the effective area. When the first cell includes a portion of cells in the effective area, during the movement of the terminal device, although the terminal device has not left the effective area, the terminal device may not have the correspondence relationship between the downlink signal index of the target cell and the transmission beams of the terminal device, so it is impossible to determine the beam for transmitting the uplink reference signals to the target cell. The target cell is a cell in the effective area and a cell to which the terminal device belongs. After moving, the terminal device is in the coverage area of the target cell.

In some embodiments, when the target cell does not belong to the first cell, or when the terminal device does not have the correspondence relationship between the downlink signal index of the target cell and the transmission beams of the terminal device, the terminal device may access the target cell. The terminal device receives second information from the target cell. The second information is configured to indicate a correspondence relationship between the downlink signal index of the target cell and the transmission beams of the terminal device. The terminal device may determine the beam for transmitting uplink reference signals to the target cell based on the second information.

In some embodiments, when the terminal device does not have the correspondence relationship between the downlink signal index of the target cell and the transmission beams of the terminal device, the terminal device may transmit uplink reference signals on all transmission beams, that is to say, the terminal device may transmit uplink reference signals on the entire set of beams obtained by beam sweeping. Each base station may detect the uplink reference signals and send the detection results to the positioning server. The positioning server performs location calculation on the detection results to determine the location of the terminal device, thereby determining the target cell to which the terminal device belongs.

In some embodiments, the positioning server may first determine whether the target cell belongs to the first cell, and then determine whether the terminal device has the correspondence relationship between the downlink signal index of the target cell and the transmission beams of the terminal device. The embodiments of the present disclosure do not specifically limit the determination method of the first cell. As an example, the first cell may be determined by the positioning server. When the first information mentioned above is sent by the positioning server to the terminal device, the positioning server can know the correspondence relationships between downlink signal indexes of which cells and the transmission beams of the terminal device have been indicated to the terminal device. As another example, the determination of the first cell may be sent by the base station to the positioning server. The base station may be a serving base station of the terminal device, such as a serving base station before the terminal device moves. For example, the first information mentioned above is sent by the base station to the terminal device. In this case, the base station may send the list information of the first cell (such as the ID list of the cell) to the positioning server. The positioning server may determine whether the target cell belongs to the first cell based on the list information of the first cell.

In some embodiments, the serving base station of the terminal device may also send the registered or resident cell of the terminal device to the positioning server, and the positioning server may determine whether the terminal has left the registered or resident cell based on the location of the terminal device. When the terminal device has left the registered or resident cell, the positioning server may determine the target cell to which the terminal device belongs. The above-mentioned serving base station may refer to a serving base station before the terminal device moves or before cell reselection.

In some embodiments, when the target cell to which the terminal device belongs does not belong to the first cell, or when the terminal device does not have the correspondence relationship between the downlink signal index of the target cell and the transmission beams of the terminal device, the second network device may send a paging message to the terminal device, referring to the operation S504 in FIG. 5. The paging message may be configured to establish a connection between the terminal device and the target cell, such as configured the terminal device to access the target cell. After the terminal device accesses the target cell, the second information may be acquired from the target cell, the second information is configured to indicate the correspondence relationship between the downlink signal index of the target cell and the transmission beams of the terminal device.

The second network device may include a network element of core network and/or a base station corresponding to the target cell. The network element of core network may include AMF and/or LMF.

In some embodiments, when the target cell does not belong to the first cell or is not in the list of the first cell, the positioning server may determine that the terminal device is missing the correspondence relationship between the downlink signal index of the target cell and the transmission beams of the terminal device. The positioning server may send indication information to the second network device. The second network device sends the paging message to the terminal device based on the indication information to enable the terminal device to access the target cell.

In some embodiments, the second network device may be the target cell. Due to the fact that the positioning server may estimate the location of the terminal device, the positioning server may report the location of the terminal device to the core network. The core network may determine the target cell to which the terminal device belongs based on the location of the terminal device. In this way, the core network may only indicate the target cell to initiate paging, without needing of monitoring all cells in the area to initiate paging, thereby saving network resources and making paging more accurate.

After receiving the paging message sent by the second network device, the terminal device may establish the connection with the target cell based on the paging message. For example, the terminal device may initiate random access to the target cell to establish an RRC connection with the target cell. After the terminal device establishes the connection with the target cell, the target cell may send the second information to the terminal device. The terminal device may determine the beam for transmitting the uplink reference signals to the second cell based on the second information.

In some embodiments, the terminal device may move to a new cell, such as moving from the serving cell to other cells in the effective area. Assuming the terminal device moves to a fourth cell, in the case where the terminal device does not access the fourth cell and does not send an uplink preamble, the terminal device cannot update the timing advance (TA). However, in some scenarios, if the terminal device does not update the TA, the positioning accuracy may decrease. Based on the above considerations, the embodiments of the present disclosure studied the conditions for updating TA. In the following, with reference to FIG. 6, the solutions of the embodiments of the present disclosure will be illustrated. It is noted that the solutions illustrated in FIG. 6 and FIG. 5 can be combined with each other in the absence of conflicts.

Referring to FIG. 6, at S610, the terminal device transmits the uplink reference signals.

The uplink reference signals are configured to determine a first TA of the terminal device relative to the fourth cell. In the following, the determination method of the first TA will be illustrated in detail. The fourth cell is a cell to which the terminal device currently belongs. The cell to which the terminal device currently belongs may refer to the cell where the terminal device is located after moving, or the cell selected by the terminal device after performing cell reselection. It should be understood that the terminal device is currently in the coverage area of the fourth cell.

The method of transmitting uplink reference signals by the terminal device may be referred to in the illustration hereinbefore, and for the sake of simplicity, it will not be repeated here. For example, the terminal device may send uplink reference signals to a plurality of cells, and the plurality of cells may measure the uplink reference signals to obtain signal measurement results. The signal measurement results of may be configured to position the terminal device. The uplink reference signals may for example include SRS.

At S620, the third network device sends first indication information to the terminal device. The first indication information is configured to indicate the terminal device to update TA and is sent in response to the first TA satisfying a first condition. That is to say, when the first TA satisfies the first condition, the third network device may send the first indication information to the terminal device. The third network device may be the base station corresponding to the fourth cell, or the third network device may be a network element of core network.

The embodiments of the present disclosure do not specify the first condition. In some embodiments, the first condition may be associated with one or more of: a size of the first TA, a size of a second TA, and the signal measurement result of the uplink reference signals. The second TA refers to a TA of the terminal device relative to the serving cell, and the serving cell may be a cell to which the terminal device is connected before moving, or a cell to which the terminal device is connected before cell reselection.

In some embodiments, the first condition may include: the first TA is greater than or equal to a first preset threshold. When the first TA is greater than or equal to the first preset threshold, the third network device sends the first indication information to the terminal device. The first preset threshold may be associated with a cyclic prefix (CP). The first preset threshold may be determined according to the time length t corresponding to CP. The first preset threshold may be, for example, t/2 or t.

In some embodiments, the first condition may include: a difference between the first TA and the second TA is greater than or equal to a second preset threshold. When the difference between the first TA and the second TA is greater than or equal to the second preset threshold, it represents that the difference between the current first TA of the terminal device and the second TA stored locally at the terminal device is relatively large. When the terminal device continues to use the second TA to send uplink reference signals, some cells may cannot receive uplink reference signals correctly, resulting in reduced positioning accuracy. Therefore, the third network device may send the first indication information to the terminal device when the difference between the first TA and the second TA is greater than or equal to the second preset threshold. The second preset threshold may be determined according to the time length t corresponding to CP. The second preset threshold may be, for example, t/2 or t.

In some embodiments, the first condition may include: the signal measurement result of the uplink reference signals is less than or equal to a third preset threshold. When the signal measurement result is less than or equal to the third preset threshold, it represents that the signal quality of the uplink reference signals is poor. When the uplink reference signals are used to position the terminal device, the positioning accuracy will get reduced. Therefore, the third network device may send the first indication information to the terminal device when the signal measurement result of the uplink reference signals is less than or equal to the third preset threshold. The third preset threshold may be determined according to the positioning accuracy of the terminal device.

The above first condition may be used alone or in combination with each other, which is not specifically limited in the embodiments of the present disclosure. For example, the first condition may include that the first TA is greater than or equal to the first preset threshold, and the signal measurement result of the uplink reference signals is less than or equal to the third preset threshold. For example, the first condition may include that the difference between the first TA and the second TA is greater than or equal to the second preset threshold, and the signal measurement result of the uplink reference signals is less than or equal to the third preset threshold. For example, the first condition may include that the first condition may include that the first TA is greater than or equal to the first preset threshold, the difference between the first TA and the second TA is greater than or equal to the second preset threshold, and the signal measurement result of the uplink reference signals is less than or equal to the third preset threshold.

The determination of the first TA is not limited in the embodiments of the present disclosure. In some embodiments, the first TA may be determined by the positioning server. In some other embodiments, the first TA may be determined by the base station corresponding to the fourth cell. In the following, the above two cases will be illustrated respectively.

In some embodiments, the first TA may be determined by the positioning server. The first TA may be determined based on the signal measurement result of the uplink reference signals. For example, the positioning server may determine the location of the terminal device based on the signal measurement result of the uplink reference signals. The positioning server may determine the first TA according to the location of the terminal device. Specifically, the positioning server may determine the cell (such as the fourth cell) to which the terminal device currently belongs according to the location of the terminal device, and then determine the first TA according to the location of the terminal device and the location of the base station corresponding to the fourth cell. This process will be illustrated below, using an example.

The terminal device may send uplink reference signals to a plurality of cells, and the plurality of cells may measure the uplink reference signals to obtain the signal measurement results. The plurality of cells may send the signal measurement results to the positioning server, and the positioning server may calculate the position based on the signal measurement results to obtain the first TA of the terminal device relative to the base station corresponding to the fourth cell.

In some embodiments, the first TA may be determined by the base station corresponding to the fourth cell. The fourth cell may receive the uplink reference signals transmitted by the terminal device, perform synchronism detection on the uplink reference signals, and estimate the first TA. In this embodiment, the function of the uplink reference signals is similar to that of the uplink preamble. After receiving the uplink reference signals, the fourth cell may determine the first TA in a manner similar to the random access process. For example, the fourth cell may determine the first TA according to the moment at which the terminal device transmits the uplink reference signals and the moment at which the fourth cell receives the uplink reference signals.

In some embodiments, when the first TA is determined by the positioning server, and the first condition includes that the difference between the first TA and the second TA is greater than or equal to the second preset threshold, the positioning server may acquire the second TA from the serving base station of the terminal device. In some embodiments, the serving base station may send the UE ID and the second TA of the terminal device to the positioning server, so that the positioning server can determine whether the terminal device satisfies the first condition.

The method embodiments of the present disclosure are illustrated in detail above in conjunction with FIGS. 1 to 6.

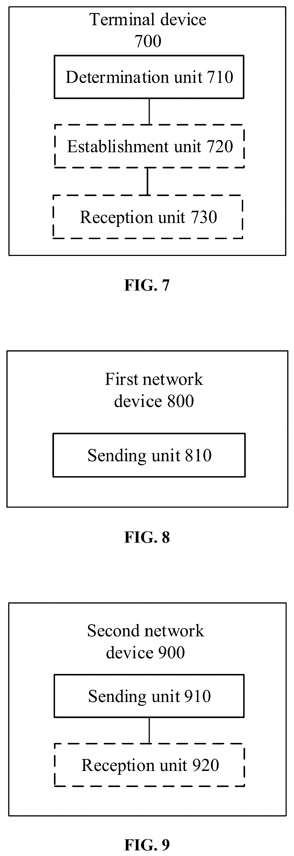

In the following, the device embodiments of the present disclosure will be illustrated in detail below in conjunction with FIGS. 7 to 12. It should be understood that the illustration of the method embodiments corresponds to the illustration of the device embodiments. Therefore, reference may be made to the method embodiments hereinbefore for the content not illustrated in detail.

FIG. 7 is a schematic block diagram of a terminal device provided in some embodiments of the present disclosure. The terminal device 700 shown in FIG. 7 may be any one of the terminal devices illustrated above. The terminal device 700 may include a determination unit 710.

The determination unit 710 is configured to determine a first beam for transmitting uplink reference signals based on a signal measurement result of a first signal. The first signal includes at least one of a downlink signal or an uplink signal, and the uplink reference signals are configured to position the terminal device.

In some embodiments, the first signal includes a downlink signal from a first cell including at least one of a serving cell or a neighboring cell. The determination unit 710 is configured to: determine the first beam for transmitting the uplink reference signals to the first cell based on first information and a signal measurement result of the downlink signal from the first cell. The first information is configured to indicate a correspondence relationship between a downlink signal index of the first cell and transmission beams of the terminal device.

In some embodiments, the downlink signal index of the first cell includes a portion of indexes of downlink signals that the first cell supports, or the downlink signal index of the first cell includes the indexes of the downlink signals that the first cell supports.

In some embodiments, the portion of the indexes of the downlink signals is determined based on a cell where the terminal device is located.

In some embodiments, the first information is transmitted to the terminal device by at least one of a positioning server or a base station.

In some embodiments, the terminal device further includes: an establishment unit 720 configured to establish a connection with a target cell in response to the target cell to which the terminal device belongs not belonging to the first cell, and a reception unit 730 configured to receive second information from the target cell. The second information is configured to indicate a correspondence relationship between a downlink signal index of the target cell and the transmission beams of the terminal device.

In some embodiments, the reception unit 730 is further configured to receive a paging message sent by a network device in response to the target cell not belonging to the first cell. The network device includes at least one of a network element of core network or a base station corresponding to the target cell. The establishment unit is configured to establish the connection with the target cell based on the paging message.

In some embodiments, the target cell is determined based on a location of the terminal device, and the location of the terminal device is determined based on a signal measurement result of the uplink reference signals measured by a plurality of cells.

In some embodiments, the downlink signal is SSB, the second information is configured to indicate a first correspondence relationship referring to a correspondence relationship between SSB indexes and transmission directions of the SSB in response to the SSB indexes having a maximum value of 64, and there is a correspondence relationship between the transmission beams of the terminal device and the transmission directions of the SSB.

The determination unit is further configured to determine at least one of a second correspondence relationship or a third correspondence relationship based on the first correspondence relationship. The second correspondence relationship refers to a correspondence relationship between the SSB indexes and the transmission directions of the SSB in response to the SSB indexes having a maximum value of 4, and the third correspondence relationship refers to a correspondence relationship between the SSB indexes and the transmission directions of the SSB in response to the SSB indexes having a maximum value of 8.

The first correspondence relationship, the second correspondence relationship, and the third correspondence relationship satisfy the following formulas:

$$Direction\_4(i) = Direction\_64(i*16+x1);$$

and

$$Direction\_8(i) = Direction\_64(i*8+x2).$$

In the formulas, i refers to a SSB index and is greater than or equal to 0 and is less than a maximum value of the SSB index, Direction _4(i) refers to a transmission direction of the SSB in response to the SSB indexes having a maximum value of 4 and being valued i, Direction_8(i) refers to a transmission direction of the SSB in response to the SSB indexes having a maximum value of 8 and being valued i, Direction _64(i) refers to a transmission direction of the SSB in response to the SSB indexes having a maximum value of 64 and being valued i, x1 is greater than or equal to 0 and is less than or equal to 15, and x2 is greater than or equal to 0 and is less than or equal to 7.

In some embodiments, the first beam includes beams respectively corresponding to a plurality of cells including a second cell and a third cell. The determination unit is further configured to: determine a second beam corresponding to the second cell based on a signal measurement result of a downlink signal from the second cell, determine a third beam corresponding to the third cell based on a signal measurement result of a downlink signal from the third cell, and determine the first beam based on the second beam and the third beam. The first beam includes beams shared by the second beam and the third beam.

In some embodiments, the downlink signal includes SSB, and/or the uplink reference signals include SRS.

FIG. 8 is a schematic block diagram of a network device provided in some embodiments of the present disclosure. The network device 800 shown in FIG. 8 may be any one of the first network devices illustrated above. The network device 800 may include a sending unit 810.

The sending unit 810 is configured to send first information to a terminal device. The first information and a signal measurement result of a first signal are configured to determine a first beam for transmitting uplink reference signals by the terminal device, the first signal includes a downlink signal from a first cell, and the uplink reference signals are configured to position the terminal device. The first information is configured to indicate a correspondence relationship between a downlink signal index of the first cell and transmission beams of the terminal device.

In some embodiments, the downlink signal index of the first cell includes a portion of indexes of downlink signals that the first cell supports, or the downlink signal index of the first cell includes the indexes of the downlink signals that the first cell supports.

In some embodiments, the portion of the indexes of the downlink signals is determined based on a cell where the terminal device is located.

In some embodiments, the first beam includes beams respectively corresponding to a plurality of cells including a second cell and a third cell, the first beam includes beams shared by a second beam and a third beam, the second beam is determined based on a signal measurement result of a downlink signal from the second cell, and the third beam is determined based on a signal measurement result of a downlink signal from the third cell.

In some embodiments, the first network device includes at least one of a positioning server or a base station.

In some embodiments, the downlink signal includes SSB, and/or the uplink reference signals include SRS.

FIG. 9 is a schematic block diagram of a network device provided in some embodiments of the present disclosure. The network device 900 shown in FIG. 9 may be any one of the second network devices illustrated above. The network device 900 may include a sending unit 910.

The sending unit 910 is configured to send a paging message to a terminal device in response to a target cell to which the terminal device belongs not belonging to a first cell. The paging message is configured for the terminal device to establish a connection for transmitting second information with the target cell. The second information is configured to indicate a correspondence relationship between a downlink signal index of the target cell and transmission beams of the terminal device, and the first cell refers to a cell having a downlink signal index, and a correspondence relationship between the downlink signal index of the first cell and the transmission beams of the terminal device is stored in the terminal device.

In some embodiments, the target cell is determined based on a location of the terminal device, and the location of the terminal device is determined based on a signal measurement result of uplink reference signals measured by a plurality of cells.

In some embodiments, the network device further includes a reception unit 920 configured to receive second indication information sent by a positioning server. The second indication information is configured to indicate that the terminal device does not have the correspondence relationship between the downlink signal index of the target cell and the transmission beams of the terminal device. The sending unit is configured to send the paging message to the terminal device based on the second indication information.

In some embodiments, the second network device includes at least one of a network element of core network or a base station corresponding to the target cell.

In some embodiments, a downlink signal includes SSB.

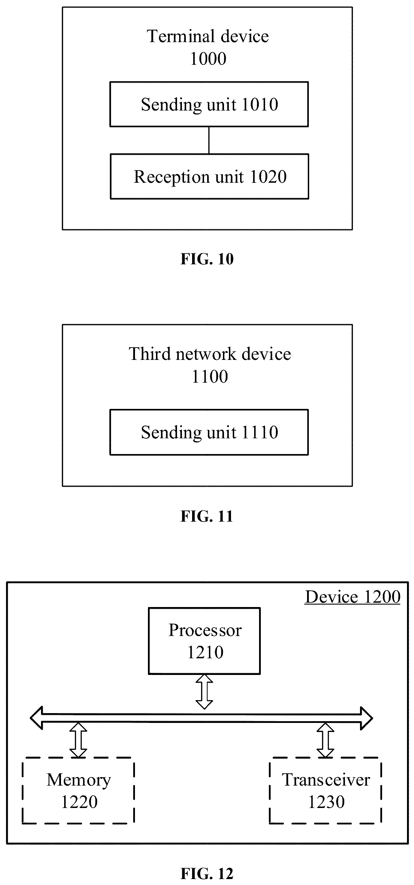

FIG. 10 is a schematic block diagram of another terminal device provided in some embodiments of the present disclosure. The terminal device 1000 shown in FIG. 10 may be any one of the terminal devices illustrated above. The terminal device 1000 may include a sending unit 1010 and a reception unit 1020.

The sending unit 1010 is configured to send uplink reference signals. The uplink reference signals are configured to determine a first TA of the terminal device relative to a fourth cell, and the fourth cell refers to a cell to which the terminal device currently belongs.

The reception unit 1020 is configured to receive first indication information sent by a third network device. The first indication information is configured to indicate the terminal device to update TA and is sent in response to the first TA satisfying a first condition.

In some embodiments, the first condition is associated with one or more of: a size of the first TA, a size of a second TA, where the second TA refers to a TA of the terminal device relative to a serving cell, and a signal measurement result of the uplink reference signals.

In some embodiments, the first condition includes one or more of: the first TA being greater than or equal to a first preset threshold, a difference between the first TA and the second TA being greater than or equal to a second preset threshold, and the signal measurement result being less than or equal to a third preset threshold.

In some embodiments, the first TA is determined by a positioning server based on a location of the terminal device, and the location of the terminal device is determined based on a signal measurement result of the uplink reference signals measured by a plurality of cells.

In some embodiments, the first TA is determined by a base station corresponding to the fourth cell based on a signal measurement result of the uplink reference signals.

In some embodiments, the third network device is a base station corresponding to the fourth cell.

In some embodiments, the uplink reference signals include SRS.

FIG. 11 is a schematic block diagram of a network device provided in some embodiments of the present disclosure. The network device 1100 shown in FIG. 11 may be any one of the third network devices illustrated above. The network device 1100 may include a sending unit 1110.

The sending unit 1110 is configured to send first indication information to a terminal device. The first indication information is configured to indicate the terminal device to update TA and is sent in response to a first TA satisfying a first condition, the first TA is determined based on uplink reference signals transmitted by the terminal device and refers to a TA of the terminal device relative to a fourth cell, and the fourth cell refers to a cell to which the terminal device currently belongs.

In some embodiments, the first condition is associated with one or more of: a size of the first TA, a size of a second TA, where the second TA refers to a TA of the terminal device relative to a serving cell, and a signal measurement result of the uplink reference signals.

In some embodiments, the first condition includes one or more of: the first TA being greater than or equal to a first preset threshold, a difference between the first TA and the second TA being greater than or equal to a second preset threshold, and the signal measurement result being less than or equal to a third preset threshold.

In some embodiments, the first TA is determined by a positioning server based on a location of the terminal device, and the location of the terminal device is determined based on a signal measurement result of the uplink reference signals measured by a plurality of cells.

In some embodiments, the first TA is determined by a base station corresponding to the fourth cell based on a signal measurement result of the uplink reference signals.

In some embodiments, the third network device is a base station corresponding to the fourth cell.

In some embodiments, the uplink reference signals include SRS.

FIG. 12 is a structural schematic diagram of a communication device provided in some embodiments of the present disclosure. The dotted lines in FIG. 12 represent that the units or modules are optional. The device 1200 may be used to implement the method illustrated in the above method embodiments. The device 1200 may be a chip, a terminal device, or a network device.

The device 1200 may include one or more processors 1210. The one or more processors 1210 can support the device 1200 to implement the method illustrated in the above method embodiments. Each of the one or more processors 1210 may be a general-purpose processor or a special-purpose processor. For example, each of the one or more processors may be a central processing unit (CPU). Alternatively, each of the one or more processors may also be other general-purpose processor, a digital signal processor (DSP), an application specific integrated circuit (ASIC), a field programmable gate array (FPGA), or other programmable logic device, a discrete gate or a transistor logic device, a discrete hardware component, or the like. A general-purpose processor may be a microprocessor or any conventional processor.

The device 1200 may further include one or more memories 1220. Each of the one or more memories 1220 stores a program that can be executed by the one or more processors 1210 so that the one or more processors 1210 perform operations of the method illustrated in the above method embodiments. The one or more memories 1220 may be independent of or integrated into the one or more processors 1210.

The device 1200 may further include a transceiver 1230. The one or more processors 1210 may communicate with other devices or chips through the transceiver 1230. For example, the one or more processors 1210 may transmit data to and receive data from other devices or chips through the transceiver 1230.

The embodiments of the present disclosure further provide a computer-readable storage medium configured to store programs. The computer-readable storage medium is applicable to the terminal devices or the network devices provided in the embodiments of the present disclosure, and the program causes a computer to perform operations of the method executed by the terminal devices or network devices in the various embodiments of the present disclosure.

The embodiments of the present disclosure further provide a computer program product including programs. The computer program product is applicable to the terminal devices or the network devices provided in the embodiments of the present disclosure, and the programs cause a computer to perform operations of the method executed by the terminal devices or network devices in the various embodiments of the present disclosure.

The embodiments of the present disclosure further provide a computer program. The computer program is applicable to the terminal devices or the network devices provided in the embodiments of the present disclosure, and the computer program causes a computer to perform operations of the method executed by the terminal devices or network devices in the various embodiments of the present disclosure.

It should be understood that the terms "system" and "network" in the present disclosure may be used interchangeably. In addition, the terms used in the present disclosure are only used to explain the embodiments of the present disclosure, and are not intended to limit the present disclosure. The terms "first", "second", "third", "fourth", and the like in the description, claims, and drawings of the present disclosure are used to distinguish different objects, rather than to describe a specific order. In addition, the terms "comprise" and "have" and any variations thereof are intended to cover a non-exclusive inclusion.

In the embodiments of the present disclosure, "indicate" mentioned herein may refer to a direct indication, or may refer to an indirect indication, or may represent that there is an association relationship. For example, A indicates B, which may represent that A directly indicates B, for example, B may be derived from A; or may represent that A indirectly indicates B, for example, A indicates C, and B may be derived from C; or may represent that there is an association relationship between A and B.

In the embodiments of the present disclosure, the reference to "including" may refer to direct inclusion or indirect inclusion. Alternatively, the "including" mentioned in the embodiments of the present disclosure may be replaced by "indicating" or "for determining". For example, A includes B, which may be replaced by A indicates B, or A is used to determine B.

In the embodiments of the present disclosure, "B corresponding to A" represents that B is associated with A, and B may be determined based on A. However, it should also be understood that, determining B based on A does not only represent determining B based only on A, but instead B may be determined based on A and/or other information.

In the embodiments of the present disclosure, the term "corresponding" may represent that there is a direct or indirect correspondence between the two, or may represent that there is an association relationship between the two, or may represent that there is a relationship such as indicating and being indicated, or configuring and being configured.

In the embodiments of the present disclosure, "predefined" or "pre-configured" may be implemented by pre-storing corresponding codes, tables, or other forms that may be used to indicate related information in devices (for example, including the terminal device and the network device), and specific implementations thereof are not limited in the present disclosure. For example, pre-defined may refer to defined in protocols.

In the embodiments of the present disclosure, the "protocol" may refer to a standard protocol in the communications field, and may include, for example, an LTE protocol, an NR protocol, and a related protocol applied to a future communications system, which is not limited in the present disclosure.

In the embodiments of the present disclosure, the term "and/or" is merely used to describe an association relationship between associated objects, indicating that there may be three relationships. For example, A and/or B may indicate that: only A exists, both A and B exist, and only B exists. In addition, the character "/" herein generally indicates an "or" relationship between the associated objects.

In the embodiments of the present disclosure, sequence numbers of the foregoing processes do not represent execution sequences. The execution sequences of the processes should be determined according to functions and internal logics of the processes, and should not be construed as any limitation on the implementation processes of the embodiments of the present disclosure.

In the embodiments provided in the present disclosure, it should be understood that, the disclosed system, apparatus, and method may be implemented in other manners. For example, the described device embodiments are merely exemplary. For example, the division of units is merely logical function division and there may be other division manners in practice. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to an actual need to achieve the objectives of the solutions of the embodiments.

In addition, function units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement embodiments, the foregoing embodiments may be implemented completely or partially in a form of computer program products. A computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center formed by integrating one or more usable medium. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for positioning, comprising:
   determining, by a terminal device, a first beam for transmitting uplink reference signals based on a signal measurement result of a first signal, wherein the first signal comprises at least one of a downlink signal or an uplink signal, and the uplink reference signals are configured to position the terminal device.

2. The method according to claim 1, wherein the first signal comprises a downlink signal from a first cell comprising at least one of a serving cell or a neighboring cell, and
   wherein determining, by the terminal device, the first beam for transmitting the uplink reference signals based on the signal measurement result of the first signal, comprises:
   determining, by the terminal device, the first beam for transmitting the uplink reference signals to the first cell based on first information and a signal measurement result of the downlink signal from the first cell, wherein the first information is configured to indicate a correspondence relationship between a downlink signal index of the first cell and transmission beams of the terminal device.

3. The method according to claim 2, wherein the downlink signal index of the first cell comprises a portion of indexes of downlink signals that the first cell supports; or
   the downlink signal index of the first cell comprises the indexes of the downlink signals that the first cell supports.

4. The method according to claim 3, wherein the portion of the indexes of the downlink signals is determined based on a cell where the terminal device is located.

5. The method according to any one of claims 2 to 4, wherein the first information is transmitted to the terminal device by at least one of a positioning server or a base station.

6. The method according to any one of claims 2 to 5, further comprising:

   in response to a target cell to which the terminal device belongs not belonging to the first cell, establishing, by the terminal device, a connection with the target cell; and
   receiving, by the terminal device, second information from the target cell, wherein the second information is configured to indicate a correspondence relationship between a downlink signal index of the target cell and the transmission beams of the terminal device.

7. The method according to claim 6, wherein establishing, by the terminal device, the connection with the target cell, comprises:

   in response to the target cell not belonging to the first cell, receiving, by the terminal device, a paging message sent by a network device, wherein the network device comprises at least one of a network element of core network or a base station corresponding to the target cell; and
establishing, by the terminal device, the connection with the target cell based on the paging message.

8. The method according to claim 7, wherein the target cell is determined based on a location of the terminal device, and the location of the terminal device is determined based on a signal measurement result of the uplink reference signals measured by a plurality of cells.

9. The method according to any one of claims 6 to 8, wherein the downlink signal is synchronization signal/physical broadcast channel block (SSB), the second information is configured to indicate a first correspondence relationship referring to a correspondence relationship between SSB indexes and transmission directions of the SSB in response to the SSB indexes having a maximum value of 64, and there is a correspondence relationship between the transmission beams of the terminal device and the transmission direction of the SSB;
wherein the method further comprises:

determining, by the terminal device, at least one of a second correspondence relationship or a third correspondence relationship based on the first correspondence relationship, wherein the second correspondence relationship refers to a correspondence relationship between the SSB indexes and the transmission directions of the SSB in response to the SSB indexes having a maximum value of 4, and the third correspondence relationship refers to a correspondence relationship between the SSB indexes and the transmission directions of the SSB in response to the SSB indexes having a maximum value of 8;
wherein the first correspondence relationship, the second correspondence relationship, and the third correspondence relationship satisfy the following formulas:

$$\text{Direction\_4}(i) = \text{Direction\_64}(i*16+x1);$$

and

$$\text{Direction\_8}(i) = \text{Direction\_64}(i*8+x2);$$

and
wherein i refers to a SSB index and is greater than or equal to 0 and is less than a maximum value of the SSB index, Direction _4(i) refers to a transmission direction of the SSB in response to the SSB indexes having a maximum value of 4 and being valued i, Direction_8(i) refers to a transmission direction of the SSB in response to the SSB indexes having a maximum value of 8 and being valued i, Direction_64(i) refers to a transmission direction of the SSB in response to the SSB indexes having a maximum value of 64 and being valued i, x1 is greater than or equal to 0 and is less than or equal to 15, and x2 is greater than or equal to 0 and is less than or equal to 7.

10. The method according to any one of claims 1 to 9, wherein the first beam comprises beams respectively corresponding to a plurality of cells comprising a second cell and a third cell, and determining, by the terminal device, the first beam for transmitting the uplink reference signals based on the signal measurement result of the first signal, comprises:

determining, by the terminal device, a second beam corresponding to the second cell based on a signal measurement result of a downlink signal from the second cell;
determining, by the terminal device, a third beam corresponding to the third cell based on a signal measurement result of a downlink signal from the third cell; and
determining, by the terminal device, the first beam based on the second beam and the third beam, wherein the first beam comprises beams shared by the second beam and the third beam.

11. The method according to any one of claims 1 to 10, wherein the downlink signal comprises SSB, and/or the uplink reference signals comprise sounding reference signal (SRS).

12. A method for positioning, comprising:

sending, by a first network device, first information to a terminal device, wherein the first information and a signal measurement result of a first signal are configured to determine a first beam for transmitting uplink reference signals by the terminal device, the first signal comprises a downlink signal from a first cell, and the uplink reference signals are configured to position the terminal device; and

wherein the first information is configured to indicate a correspondence relationship between a downlink signal index of the first cell and transmission beams of the terminal device.

13. The method according to claim 12, wherein the downlink signal index of the first cell comprises a portion of indexes of downlink signals that the first cell supports; or

the downlink signal index of the first cell comprises the indexes of the downlink signals that the first cell supports.

14. The method according to claim 13, wherein the portion of the indexes of the downlink signals is determined based on a cell where the terminal device is located.

15. The method according to any one of claims 12 to 14, wherein the first beam comprises beams respectively corresponding to a plurality of cells comprising a second cell and a third cell, the first beam comprises beams shared by a second beam and a third beam, the second beam is determined based on a signal measurement result of a downlink signal from the second cell, and the third beam is determined based on a signal measurement result of a downlink signal from the third cell.

16. The method according to any one of claims 12 to 15, wherein the first network device comprises at least one of a positioning server or a base station.

17. The method according to any one of claims 12 to 16, wherein the downlink signal comprises SSB, and/or the uplink reference signals comprise SRS.

18. A method for positioning, comprising:

in response to a target cell to which a terminal device belongs not belonging to a first cell, sending, by a second network device, a paging message to the terminal device;

wherein the paging message is configured for the terminal device to establish a connection for transmitting second information with the target cell, the second information is configured to indicate a correspondence relationship between a downlink signal index of the target cell and transmission beams of the terminal device, and the first cell refers to a cell having a downlink signal index, and a correspondence relationship between the downlink signal index of the first cell and the transmission beams of the terminal device is stored in the terminal device.

19. The method according to claim 18, wherein the target cell is determined based on a location of the terminal device, and the location of the terminal device is determined based on a signal measurement result of uplink reference signals measured by a plurality of cells.

20. The method according to claim 18 or claim 19, further comprising:

receiving, by the second network device, second indication information sent by a positioning server, wherein the second indication information is configured to indicate that the terminal device does not have the correspondence relationship between the downlink signal index of the target cell and the transmission beams of the terminal device; and

sending, by the second network device, the paging message to the terminal device based on the second indication information.

21. The method according to any one of claims 18 to 20, wherein the second network device comprises at least one of a network element of core network or a base station corresponding to the target cell.

22. The method according to any one of claims 18 to 21, wherein a downlink signal comprises SSB.

23. A method for positioning, comprising:

transmitting, by a terminal device, uplink reference signals configured to determine a first timing advance (TA) of the terminal device relative to a fourth cell, wherein the fourth cell refers to a cell to which the terminal device currently belongs; and

receiving, by the terminal device, first indication information sent by a third network device, wherein the first indication information is configured to indicate the terminal device to update TA and is sent in response to the first TA satisfying a first condition.

24. The method according to claim 23, wherein the first condition is associated with one or more of:

a size of the first TA;
a size of a second TA, wherein the second TA refers to a TA of the terminal device relative to a serving cell; and
a signal measurement result of the uplink reference signals.

25. The method according to claim 24, wherein the first condition comprises one or more of:

the first TA being greater than or equal to a first preset threshold;
a difference between the first TA and the second TA being greater than or equal to a second preset threshold; and
the signal measurement result being less than or equal to a third preset threshold.

26. The method according to any one of claims 23 to 25, wherein the first TA is determined by a positioning server based on a location of the terminal device, and the location of the terminal device is determined based on a signal measurement result of the uplink reference signals measured by a plurality of cells.

27. The method according to any one of claims 23 to 25, wherein the first TA is determined by a base station corresponding to the fourth cell based on a signal measurement result of the uplink reference signals.

28. The method according to any one of claims 23 to 27, wherein the third network device is a base station corresponding to the fourth cell.

29. The method according to any one of claims 23 to 28, wherein the uplink reference signals comprise SRS.

30. A method for positioning, comprising:
sending, by a third network device, first indication information to a terminal device, wherein the first indication information is configured to indicate the terminal device to update TA and is sent in response to a first TA satisfying a first condition, the first TA is determined based on uplink reference signals transmitted by the terminal device and refers to a TA of the terminal device relative to a fourth cell, and the fourth cell refers to a cell to which the terminal device currently belongs.

31. The method according to claim 30, wherein the first condition is associated with one or more of:

a size of the first TA;
a size of a second TA, wherein the second TA refers to a TA of the terminal device relative to a serving cell; and
a signal measurement result of the uplink reference signals.

32. The method according to claim 31, wherein the first condition comprises one or more of:

the first TA being greater than or equal to a first preset threshold;
a difference between the first TA and the second TA being greater than or equal to a second preset threshold; and
the signal measurement result being less than or equal to a third preset threshold.

33. The method according to any one of claims 30 to 32, wherein the first TA is determined by a positioning server based on a location of the terminal device, and the location of the terminal device is determined based on a signal measurement result of the uplink reference signals measured by a plurality of cells.

34. The method according to any one of claims 30 to 32, wherein the first TA is determined by a base station corresponding to the fourth cell based on a signal measurement result of the uplink reference signals.

35. The method according to any one of claims 30 to 34, wherein the third network device is a base station corresponding to the fourth cell.

36. The method according to any one of claims 30 to 35, wherein the uplink reference signals comprise SRS.

37. A terminal device, comprising:
   a determination unit configured to determine a first beam for transmitting uplink reference signals based on a signal measurement result of a first signal, wherein the first signal comprises at least one of a downlink signal or an uplink signal, and the uplink reference signals are configured to position the terminal device.

38. The terminal device according to claim 37, wherein the first signal comprises a downlink signal from a first cell comprising at least one of a serving cell or a neighboring cell, and
   wherein the determination unit is configured to:
   determine the first beam for transmitting the uplink reference signals to the first cell based on first information and a signal measurement result of the downlink signal from the first cell, wherein the first information is configured to indicate a correspondence relationship between a downlink signal index of the first cell and transmission beams of the terminal device.

39. The terminal device according to claim 38, wherein the downlink signal index of the first cell comprises a portion of indexes of downlink signals that the first cell supports; or
   the downlink signal index of the first cell comprises the indexes of the downlink signals that the first cell supports.

40. The terminal device according to claim 39, wherein the portion of the indexes of the downlink signals is determined based on a cell where the terminal device is located.

41. The terminal device according to any one of claims 38 to 40, wherein the first information is transmitted to the terminal device by at least one of a positioning server or a base station.

42. The terminal device according to any one of claims 38 to 41, further comprising:

   an establishment unit configured to establish a connection with a target cell in response to the target cell to which the terminal device belongs not belonging to the first cell; and
   a reception unit configured to receive second information from the target cell, wherein the second information is configured to indicate a correspondence relationship between a downlink signal index of the target cell and the transmission beams of the terminal device.

43. The terminal device according to claim 42, the reception unit is further configured to receive a paging message sent by a network device in response to the target cell not belonging to the first cell, wherein the network device comprises at least one of a network element of core network or a base station corresponding to the target cell; and
   wherein the establishment unit is configured to establish the connection with the target cell based on the paging message.

44. The terminal device according to claim 43, wherein the target cell is determined based on a location of the terminal device, and the location of the terminal device is determined based on a signal measurement result of the uplink reference signals measured by a plurality of cells.

45. The terminal device according to any one of claims 42 to 44, wherein the downlink signal is SSB, the second information is configured to indicate a first correspondence relationship referring to a correspondence relationship between SSB indexes and transmission directions of the SSB in response to the SSB indexes having a maximum value of 64, and there is a correspondence relationship between the transmission beams of the terminal device and the transmission directions of the SSB;

   wherein the determination unit is further configured to determine at least one of a second correspondence relationship or a third correspondence relationship based on the first correspondence relationship, wherein the second correspondence relationship refers to a correspondence relationship between the SSB indexes and the transmission directions of the SSB in response to the SSB indexes having a maximum value of 4, and the third correspondence relationship refers to a correspondence relationship between the SSB indexes and the transmission directions of the SSB in response to the SSB indexes having a maximum value of 8;
   wherein the first correspondence relationship, the second correspondence relationship, and the third correspondence relationship satisfy the following formulas:

$$\text{Direction\_4}(i) = \text{Direction\_64}(i*16+x1);$$

and

$$\text{Direction\_8}(i) = \text{Direction\_64}(i*8+x2);$$

and

wherein i refers to a SSB index and is greater than or equal to 0 and is less than a maximum value of the SSB index, Direction_4(i) refers to a transmission direction of the SSB in response to the SSB indexes having a maximum value of 4 and being valued i, Direction_8(i) refers to a transmission direction of the SSB in response to the SSB indexes having a maximum value of 8 and being valued i, Direction_64(i) refers to a transmission direction of the SSB in response to the SSB indexes having a maximum value of 64 and being valued i, x1 is greater than or equal to 0 and is less than or equal to 15, and x2 is greater than or equal to 0 and is less than or equal to 7.

46. The terminal device according to any one of claims 37 to 45, wherein the first beam comprises beams respectively corresponding to a plurality of cells comprising a second cell and a third cell, and the determination unit is further configured to:

determine a second beam corresponding to the second cell based on a signal measurement result of a downlink signal from the second cell;
determine a third beam corresponding to the third cell based on a signal measurement result of a downlink signal from the third cell; and
determine the first beam based on the second beam and the third beam, wherein the first beam comprises beams shared by the second beam and the third beam.

47. The terminal device according to any one of claims 37 to 46, wherein the downlink signal comprises SSB, and/or the uplink reference signals comprise SRS.

48. A network device, wherein the network device is a first network device and comprises:

a sending unit configured to send first information to a terminal device, wherein the first information and a signal measurement result of a first signal are configured to determine a first beam for transmitting uplink reference signals by the terminal device, the first signal comprises a downlink signal from a first cell, and the uplink reference signals are configured to position the terminal device; and
wherein the first information is configured to indicate a correspondence relationship between a downlink signal index of the first cell and transmission beams of the terminal device.

49. The network device according to claim 48, wherein the downlink signal index of the first cell comprises a portion of indexes of downlink signals that the first cell supports; or
the downlink signal index of the first cell comprises the indexes of the downlink signals that the first cell supports.

50. The network device according to claim 49, wherein the portion of the indexes of the downlink signals is determined based on a cell where the terminal device is located.

51. The network device according to any one of claims 48 to 50, wherein the first beam comprises beams respectively corresponding to a plurality of cells comprising a second cell and a third cell, the first beam comprises beams shared by a second beam and a third beam, the second beam is determined based on a signal measurement result of a downlink signal from the second cell, and the third beam is determined based on a signal measurement result of a downlink signal from the third cell.

52. The network device according to any one of claims 48 to 51, wherein the first network device comprises at least one of a positioning server or a base station.

53. The network device according to any one of claims 48 to 52, wherein the downlink signal comprises SSB, and/or the uplink reference signals comprise SRS.

54. A network device, wherein the network device is a second network device and comprises:

a sending unit configured to send a paging message to a terminal device in response to a target cell to which the terminal device belongs not belonging to a first cell; and

wherein the paging message is configured for the terminal device to establish a connection for transmitting second information with the target cell, the second information is configured to indicate a correspondence relationship between a downlink signal index of the target cell and transmission beams of the terminal device, and the first cell refers to a cell having a downlink signal index, and a correspondence relationship between the downlink signal index of the first cell and the transmission beams of the terminal device is stored in the terminal device.

55. The network device according to claim 54, wherein the target cell is determined based on a location of the terminal device, and the location of the terminal device is determined based on a signal measurement result of uplink reference signals measured by a plurality of cells.

56. The network device according to claim 54 or claim 55, further comprising a reception unit configured to receive second indication information sent by a positioning server, wherein the second indication information is configured to indicate that the terminal device does not have the correspondence relationship between the downlink signal index of the target cell and the transmission beams of the terminal device; and

wherein the sending unit is configured to send the paging message to the terminal device based on the second indication information.

57. The network device according to any one of claims 54 to 56, wherein the second network device comprises at least one of a network element of core network or a base station corresponding to the target cell.

58. The network device according to any one of claims 54 to 57, wherein a downlink signal comprises SSB.

59. A terminal device, comprising:

a sending unit configured to send uplink reference signals, wherein the uplink reference signals are configured to determine a first TA of the terminal device relative to a fourth cell, and the fourth cell refers to a cell to which the terminal device currently belongs; and

a reception unit configured to receive first indication information sent by a third network device, wherein the first indication information is configured to indicate the terminal device to update TA and is sent in response to the first TA satisfying a first condition.

60. The terminal device according to claim 59, wherein the first condition is associated with one or more of:

a size of the first TA;

a size of a second TA, wherein the second TA refers to a TA of the terminal device relative to a serving cell; and

a signal measurement result of the uplink reference signals.

61. The terminal device according to claim 60, wherein the first condition comprises one or more of:

the first TA being greater than or equal to a first preset threshold;

a difference between the first TA and the second TA being greater than or equal to a second preset threshold; and

the signal measurement result being less than or equal to a third preset threshold.

62. The terminal device according to any one of claims 59 to 61, wherein the first TA is determined by a positioning server based on a location of the terminal device, and the location of the terminal device is determined based on a signal measurement result of the uplink reference signals measured by a plurality of cells.

63. The terminal device according to any one of claims 59 to 61, wherein the first TA is determined by a base station corresponding to the fourth cell based on a signal measurement result of the uplink reference signals.

64. The terminal device according to any one of claims 59 to 63, wherein the third network device is a base station corresponding to the fourth cell.

65. The terminal device according to any one of claims 59 to 64, wherein the uplink reference signals comprise SRS.

66. A network device, wherein the network device is a third network device and comprises:

a sending unit configured to send first indication information to a terminal device, wherein the first indication information is configured to indicate the terminal device to update TA and is sent in response to a first TA satisfying a first condition, the first TA is determined based on uplink reference signals transmitted by the terminal device and refers to a TA of the terminal device relative to a fourth cell, and the fourth cell refers to a cell to which the terminal device currently belongs.

67. The network device according to claim 66, wherein the first condition is associated with one or more of:

a size of the first TA;
a size of a second TA, wherein the second TA refers to a TA of the terminal device relative to a serving cell; and
a signal measurement result of the uplink reference signals.

68. The network device according to claim 67, wherein the first condition comprises one or more of:

the first TA being greater than or equal to a first preset threshold;
a difference between the first TA and the second TA being greater than or equal to a second preset threshold; and
the signal measurement result being less than or equal to a third preset threshold.

69. The network device according to any one of claims 66 to 68, wherein the first TA is determined by a positioning server based on a location of the terminal device, and the location of the terminal device is determined based on a signal measurement result of the uplink reference signals measured by a plurality of cells.

70. The network device according to any one of claims 66 to 68, wherein the first TA is determined by a base station corresponding to the fourth cell based on a signal measurement result of the uplink reference signals.

71. The network device according to any one of claims 66 to 70, wherein the third network device is a base station corresponding to the fourth cell.

72. The network device according to any one of claims 66 to 71, wherein the uplink reference signals comprise SRS.

73. A terminal device, comprising a memory and a processor, wherein the memory is configured to store a program, and the processor is configured to call the program in the memory, causing the terminal device to perform operations of the method according to any one of claims 1 to 11 or claims 23 to 29.

74. A network device, comprising a memory and a processor, wherein the memory is configured to store a program, and the processor is configured to call the program in the memory, causing the network device to perform operations of the method according to any one of claims 12 to 17 or claims 18 to 22 or claims 30 to 36.

75. A device, comprising a processor, wherein the processor is configured to call programs from a memory, causing the device to perform operations of the method according to any one of claims 1 to 11 or claims 23 to 29.

76. A device, comprising a processor, wherein the processor is configured to call programs from a memory, causing the device to perform operations of the method according to any one of claims 12 to 17 or claims 18 to 22 or claims 30 to 36.

77. A chip, comprising a processor, wherein the processor is configured to call programs from a memory, causing a device having the chip to perform operations of the method according to any one of claims 1 to 11 or claims 23 to 29.

78. A chip, comprising a processor, wherein the processor is configured to call programs from a memory, causing a device having the chip to perform operations of the method according to any one of claims 12 to 17 or claims 18 to 22 or claims 30 to 36.

79. A computer-readable storage medium, configured to store programs, which cause a computer to perform operations of the method according to any one of claims 1 to 11 or claims 23 to 29.

80. A computer-readable storage medium, configured to store programs, which cause a computer to perform operations of the method according to any one of claims 12 to 17 or claims 18 to 22 or claims 30 to 36.

81. A computer program product, comprising programs that cause a computer to perform operations of the method according to any one of claims 1 to 11 or claims 23 to 29.

82. A computer program product, comprising programs that cause a computer to perform operations of the method according to any one of claims 12 to 17 or claims 18 to 22 or claims 30 to 36.

83. A computer program, configured to causes a computer to perform operations of the method according to any one of claims 1 to 11 or claims 23 to 29.

84. A computer program, configured to causes a computer to perform operations of the method according to any one of claims 12 to 17 or claims 18 to 22 or claims 30 to 36.

**FIG. 1**

**FIG. 2**

FIG. 3

**100**

FIG. 4

| First network device | | Terminal device | | Second network device |
|---|---|---|---|---|

S502, first information

S510, determining first beam

S504，paging message

**FIG. 5**

| Terminal device | | Third network device |
|---|---|---|

S610，sending measurement result of uplink signals

S620, first indication information

**FIG. 6**

Terminal device
700

Determination unit 710

Establishment unit 720

Reception unit 730

**FIG. 7**

First network
device 800

Sending unit 810

**FIG. 8**

Second network
device 900

Sending unit 910

Reception unit 920

**FIG. 9**

Terminal device
1000

Sending unit 1010

Reception unit 1020

**FIG. 10**

Third network device
1100

Sending unit 1110

**FIG. 11**

Device 1200

Processor
1210

Memory
1220

Transceiver
1230

**FIG. 12**

## INTERNATIONAL SEARCH REPORT

| International application No. |
|---|
| **PCT/CN2023/087102** |

| A. | CLASSIFICATION OF SUBJECT MATTER |
|---|---|

H04W4/02(2018.01)i

According to International Patent Classification (IPC) or to both national classification and IPC

| B. | FIELDS SEARCHED |
|---|---|

Minimum documentation searched (classification system followed by classification symbols)

IPC：H04L, H04W

Documentation searched other than minimum documentation to the extent that such documents are included in the fields searched

Electronic data base consulted during the international search (name of data base and, where practicable, search terms used)

CNABS, CNTXT, VEN, ENTXT, ENTXTC, CJFD, 3GPP: 定位, 终端, 信号, 测量, 上行, 参考, 下行, 波束, 位置, 小区, 邻区, 服务, 索引, 对应, 关系, 基站, 寻呼, SSB, position+, terminal, signal, measurement, uplink, reference, downlink, beam, location, cell, neighbor, service, index, correspondence, relationship, base station, pag+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110475337 A (CHENGDU HUAWEI TECHNOLOGIES CO., LTD.) 19 November 2019 (2019-11-19)<br>description, paragraphs 49-80 | 1-8, 11-14, 16-17, 37-44, 47-50, 52-53, 73-84 |
| A | CN 110475337 A (CHENGDU HUAWEI TECHNOLOGIES CO., LTD.) 19 November 2019 (2019-11-19)<br>entire document | 9-10, 15, 18-22, 45-46, 51, 54-58 |
| Y | CN 115134742 A (VIVO COMMUNICATION TECHNOLOGY CO., LTD.) 30 September 2022 (2022-09-30)<br>claim 1 | 1-8, 11-14, 16-17, 37-44, 47-50, 52-53, 73-84 |
| A | CN 115134742 A (VIVO COMMUNICATION TECHNOLOGY CO., LTD.) 30 September 2022 (2022-09-30)<br>entire document | 9-10, 15, 18-22, 45-46, 51, 54-58 |
| A | CN 113518301 A (DATANG MOBILE COMMUNICATIONS EQUIPMENT CO., LTD.) 19 October 2021 (2021-10-19)<br>entire document | 1-22, 37-58, 73-84 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2023** | **28 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/087102** |

| C. | DOCUMENTS CONSIDERED TO BE RELEVANT | | |
|---|---|---|
| Category* | Citation of document, with indication, where appropriate, of the relevant passages | Relevant to claim No. |
| A | CN 113518302 A (DATANG MOBILE COMMUNICATIONS EQUIPMENT CO., LTD.) 19 October 2021 (2021-10-19) entire document | 1-22, 37-58, 73-84 |
| A | WO 2021023912 A1 (NOKIA TECHNOLOGIES OY) 11 February 2021 (2021-02-11) entire document | 1-22, 37-58, 73-84 |

Form PCT/ISA/210 (second sheet) (July 2022)

**INTERNATIONAL SEARCH REPORT**

| International application No. |
| --- |
| **PCT/CN2023/087102** |

**Box No. III      Observations where unity of invention is lacking (Continuation of item 3 of first sheet)**

This International Searching Authority found multiple inventions in this international application, as follows:

claims 1, 12, 18, 37, 48 and 54; and claims 23, 30, 59 and 66

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-22, 37-58 and 73-84**

**Remark on Protest**
    ☐ The additional search fees were accompanied by the applicant's protest and, where applicable, the payment of a protest fee.

    ☐ The additional search fees were accompanied by the applicant's protest but the applicable protest fee was not paid within the time limit specified in the invitation.

    ☐ No protest accompanied the payment of additional search fees.

Form PCT/ISA/210 (continuation of first sheet) (July 2022)

## INTERNATIONAL SEARCH REPORT
### Information on patent family members

| | International application No. |
|---|---|
| | **PCT/CN2023/087102** |

| Patent document cited in search report | | | Publication date (day/month/year) | Patent family member(s) | | | Publication date (day/month/year) |
|---|---|---|---|---|---|---|---|
| CN | 110475337 | A | 19 November 2019 | EP | 3780786 | A1 | 17 February 2021 |
| | | | | EP | 3780786 | A4 | 26 May 2021 |
| | | | | WO | 2019214611 | A1 | 14 November 2019 |
| | | | | US | 2021058999 | A1 | 25 February 2021 |
| | | | | US | 11477838 | B2 | 18 October 2022 |
| CN | 115134742 | A | 30 September 2022 | None | | | |
| CN | 113518301 | A | 19 October 2021 | None | | | |
| CN | 113518302 | A | 19 October 2021 | None | | | |
| WO | 2021023912 | A1 | 11 February 2021 | EP | 4008122 | A1 | 08 June 2022 |
| | | | | EP | 4008122 | A4 | 02 August 2023 |

Form PCT/ISA/210 (patent family annex) (July 2022)